# EUROPEAN PATENT APPLICATION

(11) **EP 4 697 200 A1**
(43) Date of publication of application: **18.02.2026**
(21) Application number: 24842074.7
(22) Date of filing: 29.05.2024
(51) Int. Cl.: G06F 16/9032, G06F 3/0481

(54) **HUMAN-COMPUTER INTERACTION METHOD AND ELECTRONIC DEVICE**

(30) Priority: 19.07.2023 CN 202310892843
(71) Applicant: Huawei Technologies Co., Ltd., Shenzhen, Guangdong 518129 (CN)
(72) Inventor: HOU, Zongzhi, Shenzhen, Guangdong 518129 (CN); MU, Xueman, Shenzhen, Guangdong 518129 (CN); WU, Yizhen, Shenzhen, Guangdong 518129 (CN); YU, Weijiang, Shenzhen, Guangdong 518129 (CN); YANG, Shu, Shenzhen, Guangdong 518129 (CN); SHEN, Miaomiao, Shenzhen, Guangdong 518129 (CN)
(74) Representative: Pfenning, Meinig & Partner mbB
(86) International application number: PCT/CN2024/096187
(87) International publication number: WO 2025/016074

(57) **Abstract**

A human-machine interaction method and an electronic device are provided, and relate to the field of Al. The method is applied to the electronic device, and includes: receiving a user instruction, and when the user instruction indicates a scenario intent, obtaining a plurality of target APIs based on the scenario intent, where the plurality of target APIs correspond to the scenario intent; and then, outputting results of calling the plurality of target APIs, where the results of calling the plurality of APIs may be used to implement a user requirement corresponding to the scenario intent. In this way, the electronic device can directly output, based on a scenario intent of a user, a result that is of calling an API and that meets a user requirement under the scenario intent. The API is a direct exposure of an application function. Results of calling a plurality of APIs are directly output, so that a richer, more comprehensive, and more convenient response result is implemented, to meet a user requirement, and improve a human-machine dialog effect.

## Description

This application claims priority to Chinese Patent Application No. 202310892843.6, filed with the China National Intellectual Property Administration on July 19, 2023 and entitled "HUMAN-MACHINE INTERACTION METHOD AND ELECTRONIC DEVICE", which is incorporated herein by reference in its entirety.

### TECHNICAL FIELD

This application relates to the field of artificial intelligence (artificial intelligence, Al), and in particular, to a human-machine interaction method and an electronic device.

### BACKGROUND

Currently, with rapid development of AI technologies, in a human-machine interaction scenario, an electronic device can recognize a user intent based on an instruction (for example, a question or a query) entered by a user, and respond to the instruction of the user based on the AI technologies and the recognized user intent. For example, when receiving the query entered by the user, the electronic device may directly display a corresponding text, widget, or the like based on semantics of the user intent recognized based on the query, to answer the query of the user. This response manner is overly simplistic, and cannot meet a user requirement, resulting in a poor human-machine dialog effect.

### SUMMARY

This application provides a human-machine interaction method and an electronic device, so that a richer, more comprehensive, and more convenient response result based on a scenario intent of a user is provided, to meet a user requirement, and improve a human-machine dialog effect.

To achieve the foregoing objective, this application uses the following technical solutions.

According to a first aspect, a human-machine interaction method is provided. The method is applied to an electronic device, and includes: receiving a user instruction; when the user instruction indicates a first scenario intent, obtaining a plurality of target application programming interfaces APIs based on the first scenario intent, where the plurality of target APIs correspond to the first scenario intent; and outputting results of calling the plurality of target APIs, where the results of calling the plurality of target APIs are used to implement a user requirement corresponding to the first scenario intent.

Based on the foregoing technical solution, when the user instruction indicating the scenario intent is received, the plurality of corresponding APIs are obtained based on the scenario intent of the user, and the results of calling the plurality of APIs are output. The results of calling the plurality of APIs may be used to implement a user requirement corresponding to the scenario intent of the user. In this way, in response to the scenario intent of the user, the result of calling the API is directly output to the user. The API is a direct exposure of an application function. The user may directly start a function of the application through the result of calling the API, so that the response information is more convenient. In addition, the results of calling the plurality of APIs are output, so that the response information is richer and more comprehensive, to meet a user requirement, and improve a human-machine dialog effect.

In a possible design, obtaining the plurality of target APIs based on the first scenario intent includes: obtaining the plurality of target APIs based on the first scenario intent and a user profile and/or environment scenario information of the electronic device, where the environment scenario information of the electronic device indicates at least one of an ambient environment condition of the electronic device and a state of the electronic device. Based on this design, the plurality of APIs under the scenario intent are obtained with reference to various information such as the scenario intent, the user profile, and the environment scenario information of the electronic device, so that the obtained APIs correspond to the user profile, the environment scenario information of the electronic device, and the like. The user profile, the environment scenario information, and the like may reflect a preference, a habit, and the like of the user, so that the obtained APIs better meet the preference and the habit of the user. In this way, a response result, namely, the output results of calling the plurality of APIs, meets a requirement of the user under the scenario intent, and makes the response result more personalized and pertinent, to meet an actual preference of the user.

In a possible design, obtaining the plurality of target APIs based on the first scenario intent and the user profile and/or the environment scenario information of the electronic device includes: sending the first scenario intent and the user profile and/or the environment scenario information of the electronic device to a server; and receiving the plurality of target APIs from the server. Based on this design, the server determines the plurality of APIs under the scenario intent based on information such as the user profile, the environment scenario information of the electronic device, and the scenario intent, and computing power of the server is high. In this way, a more accurate API corresponding to the scenario intent can be obtained, so that the response result is more accurate.

In a possible design, outputting the results of calling the plurality of target APIs includes: outputting the results of calling the plurality of target APIs in a multi-modal display manner of the results of calling the plurality of target APIs, where the multi-modal display manner is a manner of displaying an API in a plurality of text, picture, audio, and video. Based on this design, the results of calling the plurality of APIs are output in the multi-modal display manner, so that the response result is richer and more intuitive.

In a possible design, before outputting the results of calling the plurality of target APIs in the multi-modal display manner of the results of calling the plurality of target APIs, the method further includes: receiving, from the server, the multi-modal display manner of the results of calling the plurality of target APIs. Based on this design, the electronic device may directly receive, from the server, the multi-modal display manner of the result of calling the API, and then display the result of calling the API in the multi-modal display manner. There is no need to additionally perform an operation of determining the display manner of the result of calling the API, so that power consumption of the electronic device can be reduced.

In a possible design, the multi-modal display manner corresponds to the environment scenario information of the electronic device. The environment scenario information of the electronic device indicates the environment condition of the electronic device, the state of the electronic device, and the like. In different environment conditions, the user may expect to display, in different manners, the result of calling the API. For example, if the electronic device is in a noisy environment, because the user may not hear or focus on video or audio content, the user may be more inclined to read a text or view a picture. If the electronic device is in a quiet environment, the user may be more inclined to watch video content or listen to audio content. In this way, the multi-modal display manner corresponds to the environment scenario information of the electronic device. A display manner of the result of calling the API can be adapted to a current environment, a state of the electronic device, and the like. Preferences of the user in different environments under a same scenario intent can be met, so that a personalized recommendation display effect is implemented, to better meet an actual requirement of the user.

In a possible design, if the environment scenario information of the electronic device indicates that the electronic device is in a first environment condition, the multi-modal display manner is a first display manner; or if the environment scenario information of the electronic device indicates that the electronic device is in a second environment condition, and the second environment condition is different from the first environment condition, the multi-modal display manner is a second display manner, and the second display manner is different from the first display manner. Based on this design, under a same scenario intent, in different environment conditions, different multi-modal display manners are used to display results of calling a plurality of APIs obtained under the scenario intent, so that different display effects can be achieved in different environment conditions, to meet preferences of the user in different environment conditions.

In a possible design, the first environment condition is a quiet environment, the first display manner is displaying, in video and/or audio, the results of calling the plurality of target APIs; and the second environment condition is a noisy environment, and the second display manner is displaying, in text and/or picture, the results of calling the plurality of target APIs.

In a possible design, the plurality of target APIs correspond to the user profile. Based on this design, the user profile may reflect a preference, a habit, and the like of the user. Therefore, the API corresponding to the scenario intent adapts to the user profile, so that the API under the scenario intent also adapts to the preference, the habit, and the like of the user, to better meet an actual requirement of the user.

In a possible design, if the user profile is a first user profile, the plurality of target APIs are a plurality of first APIs; or if the user profile is a second user profile, and the second user profile is different from the first user profile, the plurality of target APIs are a plurality of second APIs, and the plurality of second APIs and the plurality of first APIs include different APIs. Based on this design, under a same scenario intent, different users may correspond to different user profiles, and then corresponding response information is output based on different user profiles. In other words, different response information can be recommended for different users, so that requirements of various users can be flexibly met, and homogenization of generated response information can be avoided.

In a possible design, before receiving the user instruction, the method further includes: generating the user profile based on a plurality of a second scenario intent, an API corresponding to the second scenario intent, and an operation record of a user on a result of calling the API corresponding to the second scenario intent, where the second scenario intent is a scenario intent obtained before receiving the user instruction. Based on this design, the user profile is generated based on the API corresponding to the scenario intent and an operation record of the user on the result of the API corresponding to the historical scenario intent, so that the generated user profile can reflect a real preference or requirement of the user under one or more scenario intents, and further a response result of the user under a scenario intent is determined based on the user profile that can reflect the real preference or requirement of the user under the one or more scenario intents. This makes the response result better meet the requirement of the user under the scenario intent, and improves accuracy and pertinence of the response result.

In a possible design, before obtaining the plurality of target APIs based on the first scenario intent, the method further includes: determining the first scenario intent based on a preset scenario intent set and the user instruction, where the preset scenario intent set includes a plurality of scenario intents. Based on the design, a terminal device determines the first scenario intent based on the preset scenario intent set and the user instruction. This can prevent sensitive data of the user from being uploaded to a cloud, and protect privacy security of the user.

In a possible design, the first scenario intent and the user profile and/or the environment scenario information of the electronic device are included in first information, the first information further includes at least one of a security check code and a type of the electronic device, the security check code is used to check the first information, and the type of the electronic device is used to determine the plurality of target APIs. Based on the design, information sent by the electronic device to the server includes the security check code, to ensure security of the information sent by the electronic device to the server, and prevent the information from being tampered with. A plurality of different electronic devices may have a same account (for example, a Huawei account). For example, for a mobile phone, a tablet, a watch, and the like of a same user, corresponding user accounts may be the same. Therefore, some data of these different electronic devices may be shared. To prevent, from being completely the same, response results determined by the server for these different electronic devices, that is, to output different response results on different electronic devices under a same account, the electronic device may send the device type of the electronic device to the server, to further improve an output effect of the response result.

According to a second aspect, a human-machine interaction method is provided. The method is applied to a server. The method includes: receiving first information from an electronic device, where the first information includes a first scenario intent; generating second information based on the first information and an API corresponding to the first scenario intent, where the second information includes a plurality of target APIs, the plurality of target APIs correspond to the first scenario intent, and the plurality of target APIs are used to implement a user requirement corresponding to the first scenario intent; and sending the second information to the electronic device.

In a possible design, the first information further includes a user profile and/or environment scenario information of the electronic device, where the environment scenario information of the electronic device indicates at least one of an ambient environment condition of the electronic device and a state of the electronic device.

In a possible design, the second information further includes a multi-modal display manner of results of calling the plurality of target APIs, and the multi-modal display manner is a manner of displaying an API in a plurality of text, picture, audio, and video.

In a possible design, the multi-modal display manner corresponds to the environment scenario information of the electronic device.

In a possible design, if the environment scenario information of the electronic device indicates that the electronic device is in a first environment condition, the multi-modal display manner is a first display manner; or if the environment scenario information of the electronic device indicates that the electronic device is in a second environment condition, and the second environment condition is different from the first environment condition, the multi-modal display manner is a second display manner, and the second display manner is different from the first display manner.

In a possible design, the first environment condition is a quiet environment, the first display manner is displaying, in video and/or audio, the results of calling the plurality of target APIs; and the second environment condition is a noisy environment, and the second display manner is displaying, in text and/or picture, the results of calling the plurality of target APIs.

In a possible design, the plurality of target APIs correspond to the user profile.

In a possible design, if the user profile is a first user profile, the plurality of target APIs are a plurality of first APIs; or if the user profile is a second user profile, and the second user profile is different from the first user profile, the plurality of target APIs are a plurality of second APIs, and the plurality of second APIs and the plurality of first APIs include different APIs.

In a possible design, before generating the second information based on the first information and the API corresponding to the first scenario intent, the method further includes: determining, based on a preset scenario intent set, an API corresponding to the preset scenario intent set, and the first scenario intent, the API corresponding to the first scenario intent, where the preset scenario intent set includes a plurality of scenario intents, and the API corresponding to the preset scenario intent set is an API corresponding to each of the plurality of scenario intents.

In a possible design, generating the second information based on the first information and the API corresponding to the first scenario intent includes: inputting the first information and the API corresponding to the first scenario intent into a preset model, and outputting the second information via the preset model. In this way, the server inputs the user profile, the environment scenario information of the electronic device, the scenario intent, the API corresponding to the scenario intent, and the like into the model, and outputs a response result via the model, to obtain an accurate and rich response result.

In a possible design, the first information further includes at least one of a security check code and a type of the electronic device, the security check code is used to check the first information, and the type of the electronic device is used to determine the plurality of target APIs.

It should be noted that, for technical effects achieved by another design of the second aspect, refer to technical effects achieved by a corresponding design of the first aspect. Details are not described herein again.

According to a third aspect, an electronic device is provided. The electronic device has a function of implementing the method according to the first aspect and any design of the first aspect. The function may be implemented by hardware, or may be implemented by hardware executing corresponding software. The hardware or the software includes one or more modules corresponding to the function. In a possible example, the electronic device includes a processing unit (or referred to as a processing module). The processing unit is configured to: receive a user instruction; when the user instruction indicates a first scenario intent, obtain a plurality of target APIs based on the first scenario intent, where the plurality of target APIs correspond to the first scenario intent; and output results of calling the plurality of target APIs, where the results of calling the plurality of target APIs are used to implement a user requirement corresponding to the first scenario intent.

In a possible design, the processing unit is specifically configured to: obtain the plurality of target APIs based on the first scenario intent and a user profile and/or environment scenario information of the electronic device, where the environment scenario information of the electronic device indicates at least one of an ambient environment condition of the electronic device and a state of the electronic device.

In a possible design, the electronic device further includes a communication unit. The communication unit is configured to: send the first scenario intent and the user profile and/or the environment scenario information of the electronic device to a server; and receive the plurality of target APIs from the server.

In a possible design, the processing unit is specifically configured to output the results of calling the plurality of target APIs in a multi-modal display manner of the results of calling the plurality of target APIs, where the multi-modal display manner is a manner of displaying an API in a plurality of text, picture, audio, and video.

In a possible design, the communication unit is further configured to receive, from the server, the multi-modal display manner of the results of calling the plurality of target APIs.

In a possible design, the multi-modal display manner corresponds to the environment scenario information of the electronic device.

In a possible design, if the environment scenario information of the electronic device indicates that the electronic device is in a first environment condition, the multi-modal display manner is a first display manner; or if the environment scenario information of the electronic device indicates that the electronic device is in a second environment condition, and the second environment condition is different from the first environment condition, the multi-modal display manner is a second display manner, and the second display manner is different from the first display manner.

In a possible design, the first environment condition is a quiet environment, the first display manner is displaying, in video and/or audio, the results of calling the plurality of target APIs; and the second environment condition is a noisy environment, and the second display manner is displaying, in text and/or picture, the results of calling the plurality of target APIs.

In a possible design, the plurality of target APIs correspond to the user profile.

In a possible design, if the user profile is a first user profile, the plurality of target APIs are a plurality of first APIs; or if the user profile is a second user profile, and the second user profile is different from the first user profile, the plurality of target APIs are a plurality of second APIs, and the plurality of second APIs and the plurality of first APIs include different APIs.

In a possible design, the processing unit is further configured to generate the user profile based on a plurality of a second scenario intent, an API corresponding to the second scenario intent, and an operation record of a user on a result of calling the API corresponding to the second scenario intent, where the second scenario intent is a scenario intent obtained before receiving the user instruction.

In a possible design, the processing unit is further configured to determine the first scenario intent based on a preset scenario intent set and the user instruction, where the preset scenario intent set includes a plurality of scenario intents.

In a possible design, the first scenario intent and the user profile and/or the environment scenario information of the electronic device are included in first information, the first information further includes at least one of a security check code and a type of the electronic device, the security check code is used to check the first information, and the type of the electronic device is used to determine the plurality of target APIs.

According to a fourth aspect, a server is provided. The server has a function of implementing the method according to the second aspect and any design of the second aspect. The function may be implemented by hardware, or may be implemented by hardware executing corresponding software. The hardware or the software includes one or more modules corresponding to the function. In a possible example, the server includes a communication unit (or referred to as a communication module) and a processing unit (or referred to as a processing module). The communication unit is configured to receive first information from an electronic device, where the first information includes a first scenario intent; the processing unit is configured to generate second information based on the first information and an API corresponding to the first scenario intent, where the second information includes a plurality of target APIs, the plurality of target APIs correspond to the first scenario intent, and the plurality of target APIs are used to implement a user requirement corresponding to the first scenario intent; and the communication unit is configured to send the second information to the electronic device.

In a possible design, the first information further includes a user profile and/or environment scenario information of the electronic device, where the environment scenario information of the electronic device indicates at least one of an ambient environment condition of the electronic device and a state of the electronic device.

In a possible design, the second information further includes a multi-modal display manner of results of calling the plurality of target APIs, and the multi-modal display manner is a manner of displaying an API in a plurality of text, picture, audio, and video.

In a possible design, the multi-modal display manner corresponds to the environment scenario information of the electronic device.

In a possible design, if the environment scenario information of the electronic device indicates that the electronic device is in a first environment condition, the multi-modal display manner is a first display manner; or if the environment scenario information of the electronic device indicates that the electronic device is in a second environment condition, and the second environment condition is different from the first environment condition, the multi-modal display manner is a second display manner, and the second display manner is different from the first display manner.

In a possible design, the first environment condition is a quiet environment, the first display manner is displaying, in video and/or audio, the results of calling the plurality of target APIs; and the second environment condition is a noisy environment, and the second display manner is displaying, in text and/or picture, the results of calling the plurality of target APIs.

In a possible design, the plurality of target APIs correspond to the user profile.

In a possible design, if the user profile is a first user profile, the plurality of target APIs are a plurality of first APIs; or if the user profile is a second user profile, and the second user profile is different from the first user profile, the plurality of target APIs are a plurality of second APIs, and the plurality of second APIs and the plurality of first APIs include different APIs.

In a possible design, the processing unit is further configured to determine, based on a preset scenario intent set, an API corresponding to the preset scenario intent set, and the first scenario intent, the API corresponding to the first scenario intent, where the preset scenario intent set includes a plurality of scenario intents, and the API corresponding to the preset scenario intent set is an API corresponding to each of the plurality of scenario intents.

In a possible design, the processing unit is specifically configured to: input the first information and the API corresponding to the first scenario intent into a preset model, and output the second information via the preset model.

In a possible design, the first information further includes at least one of a security check code and a type of the electronic device, the security check code is used to check the first information, and the type of the electronic device is used to determine the plurality of target APIs.

According to a fifth aspect, an electronic device is provided, including a processor and a memory. The memory is coupled to the processor, and the memory is configured to store computer program code, where the computer program code includes computer instructions. The processor reads the computer instructions from the memory, so that the electronic device performs the method according to the first aspect and any design of the first aspect. Optionally, the memory may be coupled to the processor, or may be independent of the memory.

In a possible design, the electronic device further includes a communication interface, and the communication interface may be used by the electronic device to communicate with another apparatus. For example, the communication interface may be a transceiver, an input/output interface, an interface circuit, an output circuit, an input circuit, a pin, a related circuit, or the like.

In a possible design, the electronic device may further include an output device, and the output device may include but is not limited to a display and an audio module. The display may be configured to output image information. The audio module may be configured to output audio information.

According to a sixth aspect, a server is provided, including a processor, a memory, and a communication interface. The memory and the communication interface are coupled to the processor, the communication interface is configured to communicate with another device, the memory is configured to store computer program code, the computer program code includes computer instructions, and the processor reads the computer instructions from the memory, so that the server performs the method according to the second aspect and any design of the second aspect. Optionally, the memory may be coupled to the processor, or may be independent of the memory.

According to a seventh aspect, a computer-readable storage medium is provided. The computer-readable storage medium includes a computer program, and when the computer program is run on an electronic device, the electronic device is enabled to perform the method according to the first aspect and any design of the first aspect; or when the computer program is run on a server, the server is enabled to perform the method according to the second aspect and any design of the second aspect.

According to an eighth aspect, a computer program product is provided. The computer program product includes a computer program or instructions, and when the computer program or the instructions are run on a computer, the computer is enabled to perform the method according to the first aspect and any design of the first aspect, or the computer is enabled to perform the method according to the second aspect and any design of the second aspect.

According to a ninth aspect, a circuit system is provided. The circuit system includes a processing circuit, and the processing circuit is configured to perform the method according to the first aspect or any design of the second aspect.

According to a tenth aspect, a chip system is provided, including at least one processor and at least one interface circuit. The at least one interface circuit is configured to: perform a transceiver function, and send instructions to the at least one processor, and when the at least one processor executes the instructions, the at least one processor performs the method according to the first aspect or any design of the second aspect.

According to an eleventh aspect, a communication system is provided, including the electronic device according to the third aspect and the server according to the fourth aspect.

It should be noted that, for technical effects achieved by any design of the third aspect to the eleventh aspect, refer to technical effects achieved by a corresponding design of the first aspect and the second aspect. Details are not described herein again.

### BRIEF DESCRIPTION OF DRAWINGS

FIG. 1(1) and FIG. 1(2) are a diagram of an existing human-machine interaction interface;
FIG. 2 is a diagram of a process of an existing human-machine interaction method;
FIG. 3 is a diagram of a process of another existing human-machine interaction method;
FIG. 4 is a diagram of an architecture of a communication system according to an embodiment of this application;
FIG. 5 is a diagram of a structure of a server according to an embodiment of this application;
FIG. 6 is a diagram of a structure of an electronic device according to an embodiment of this application;
FIG. 7 is a diagram of another structure of an electronic device and another structure of a server according to an embodiment of this application;
FIG. 8 is a schematic flowchart of a human-machine interaction method according to an embodiment of this application;
FIG. 9 is a diagram 1 of an interface according to an embodiment of this application;
FIG. 10(1) to FIG. 10(3) are a diagram 2 of an interface according to an embodiment of this application;
FIG. 11 is a diagram 3 of an interface according to an embodiment of this application;
FIG. 12 is a diagram of APIs corresponding to scenario intents according to an embodiment of this application;
FIG. 13 is a diagram 4 of an interface according to an embodiment of this application;
FIG. 14(1) to FIG. 14(4) are a diagram 5 of an interface according to an embodiment of this application;
FIG. 15 is a schematic flowchart of another human-machine interaction method according to an embodiment of this application;
FIG. 16 is a diagram of a user profile according to an embodiment of this application;
FIG. 17 is a diagram of another user profile according to an embodiment of this application;
FIG. 18 is a diagram of user tags associated with APIs according to an embodiment of this application;
FIG. 19 is a diagram of response information corresponding to different user profiles according to an embodiment of this application;
FIG. 20 is a diagram of response information corresponding to different environment information according to an embodiment of this application;
FIG. 21(1) and FIG. 21(2) are a diagram 6 of an interface according to an embodiment of this application;
FIG. 22(1) and FIG. 22(2) are a diagram 7 of an interface according to an embodiment of this application;
FIG. 23 is a diagram of a structure of a device according to an embodiment of this application; and
FIG. 24 is a diagram of a structure of a chip system according to an embodiment of this application.

### DESCRIPTION OF EMBODIMENTS

The following describes technical solutions in embodiments in this application in detail with reference to the accompanying drawings.

Terms "including", "having", and any other variant thereof mentioned in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the word "example" or "for example" indicates giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In the descriptions of this application, unless otherwise specified, "a plurality of" means two or more than two. A term "and/or" in this specification describes only an association relationship between associated objects and indicates that there may be three relationships. For example, A and/or B may indicate the following three cases: Only A exists, both A and B exist, and only B exists.

It may be understood that in embodiments of this application, scenario intents refer to actual or potential requirements of users in different scenarios. An application programming interface (application programming interface, API) is a set of definitions, programs, and protocols. Communication between computer software can be implemented through the API. For example, the API defines types of calling or requesting that can be made between different computer software, how to make calling and send a request, a data format that needs to be used, and the like.

Currently, an electronic device (like a mobile phone) may respond to a scenario intent entered by a user based on an AI technology. For example, the user may enter a scenario intent into the electronic device in various manners, for example, in voice. After receiving the scenario intent entered by the user, the electronic device calls a single function in response to the scenario intent, for example, directly displays a text, a widget, or the like.

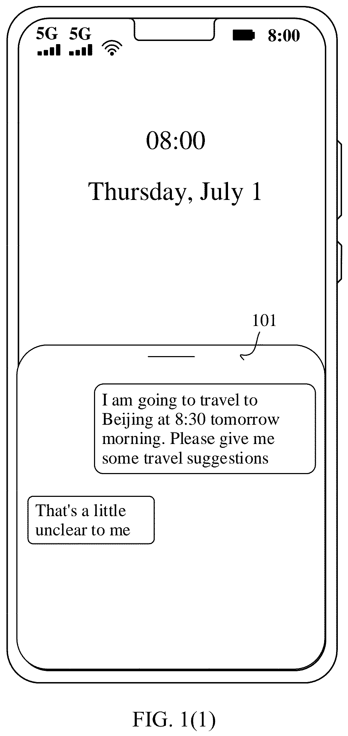

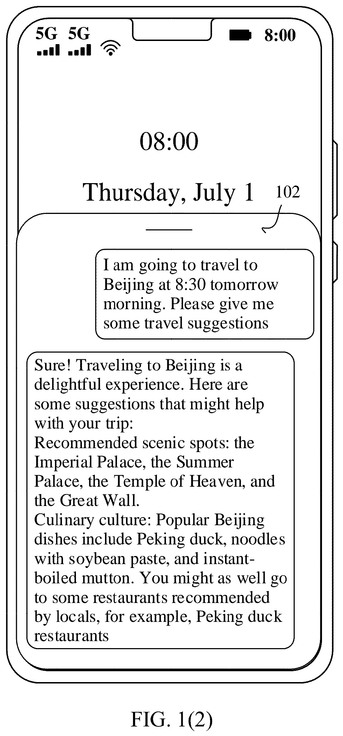

For example, the electronic device is a mobile phone. When the user has a travel requirement, the user may enter a speech instruction like "I am going to travel to Beijing at 8:30 tomorrow morning. Please give me some travel suggestions" into the mobile phone. In response to the speech instruction entered by the user, the mobile phone may respond in a manner like a text or a widget. In some examples, the mobile phone may fail to recognize the scenario intent of the user based on the speech instruction entered by the user. In this case, the mobile phone may display content in a widget 101 shown in FIG. 1(1), for example, display texts of a response failure, for example, "That's a little unclear to me". In some other examples, after recognizing the scenario intent of the user based on the speech instruction entered by the user, if the mobile phone determines that the scenario intent of the user is a travel intent, the mobile phone may display content in a widget 102 shown in FIG. 1(2), for example, recommend simple information such as some scenic spots and food culture to the user in a form of text.

The foregoing response manners are limited to semantic logic of the scenario intent, and all response results are overly simplistic, and cannot meet user requirements, resulting in a poor human-machine dialog effect.

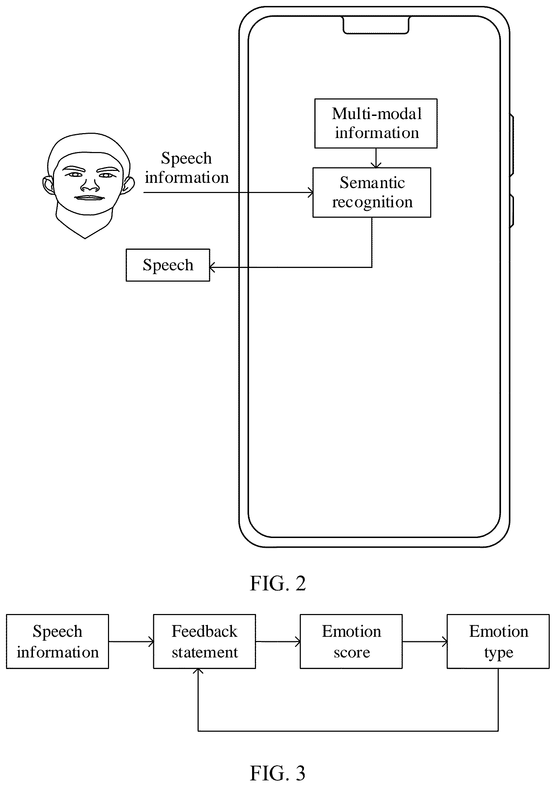

In an existing related solution, as shown in FIG. 2, in a human-machine dialog scenario, the mobile phone receives speech information entered by the user, and then the mobile phone performs semantic recognition on the speech information based on multi-modal information (for example, ambient information of a conversation environment, a speech of the user, and an expression (of a face or a body) of the user), to understand a speech of the user, and output a corresponding speech to respond to the user. In this solution, query of the user is responded to through speech outputting. The response result is also simplistic, and a rich, comprehensive, and convenient response result cannot be provided based on different scenario intents of the user. Consequently, a user requirement cannot be met, resulting in a poor human-machine dialog effect.

In another existing related solution, as shown in FIG. 3, speech information entered by the user is received in a speech interaction process, a feedback statement is generated based on the speech information, an emotion score of the feedback statement is calculated based on a specified emotion scoring mechanism, an emotion type is determined based on the emotion score, and the feedback statement is played based on the emotion type. In this solution, only the corresponding feedback statement is played in voice based on the speech information entered by the user. The response result is simplistic, and a rich, comprehensive, and convenient response result cannot be provided based on different scenario intents of the user. Consequently, a user requirement cannot be met, resulting in a poor human-machine dialog effect.

Based on this, an embodiment of this application provides a human-machine interaction method, to resolve a problem that a response result for a query of a user is simplistic, so as to provide a richer, more comprehensive, and more convenient response result based on a scenario intent of the user, meet a user requirement, and improve a human-machine dialog effect.

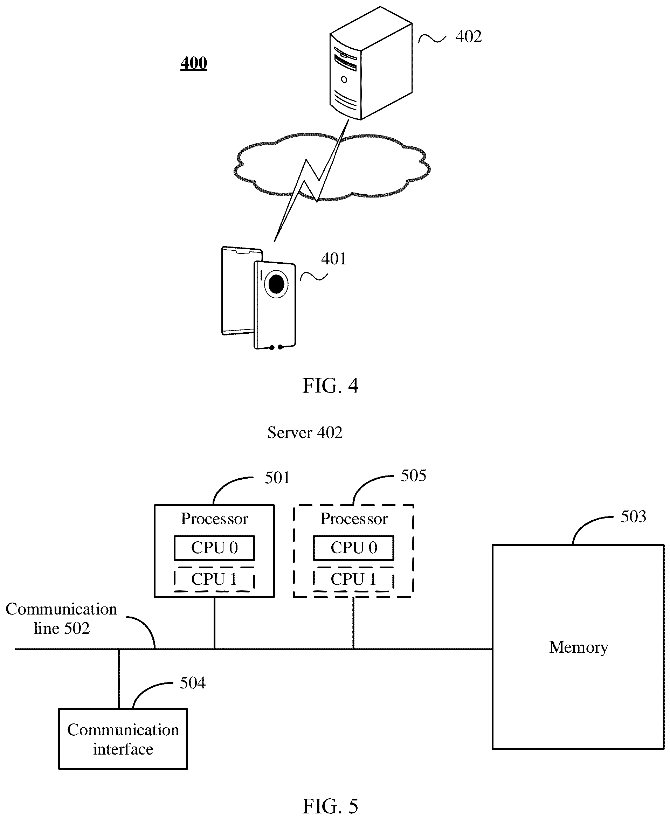

For example, FIG. 4 is a diagram of an architecture of a communication system to which a human-machine interaction method is applied according to an embodiment of this application. As shown in FIG. 4, the communication system 400 includes an electronic device 401 and a server 402.

The electronic device 401 and the server 402 may establish a connection by using a wired communication technology and/or a wireless communication technology. The wireless communication technology includes but is not limited to at least one of the following: near field communication (near field communication, NFC), Bluetooth (Bluetooth, BT) (for example, conventional Bluetooth or Bluetooth low energy (Bluetooth low energy, BLE)), a wireless local area network (wireless local area network, WLAN) (for example, a wireless fidelity (wireless fidelity, Wi-Fi) network), ZigBee (ZigBee), frequency modulation (frequency modulation, FM), infrared (infrared, IR), and the like.

For example, the electronic device 401 may be a terminal device, for example, a mobile phone (mobile phone), a personal computer (personal computer, PC), a tablet computer (Pad), a notebook computer, a desktop computer, a notebook computer, a computer with a transceiver function, a wearable device, a vehicle-mounted device, or an artificial intelligence (artificial intelligence, AI) device. An operating system installed on the electronic device 401 includes but is not limited to iOS^{®}, Android^{®}, Harmony^{®}, Windows^{®}, Linux^{®}, or another operating system. In some embodiments, the electronic device 401 may be a fixed device, or may be a portable device. A specific type of the electronic device 401 and an installed operating system are not limited in this application.

Optionally, the server 402 may be a device or a server with a computing function, for example, a cloud server or a network server. The server 402 may be a server, a server cluster including a plurality of servers, or a cloud computing service center. For example, the server cluster may be a server cluster including one or more of a server in one or more regions, a server in one or more equipment rooms. Optionally, an operating system of the server 402 includes but is not limited to Windows^{®}, Linux^{®}, or another operating system. A specific type of the server 402 and an installed operating system are not limited in this application either.

In some embodiments, the electronic device 401 may receive an instruction entered by a user, and determine a scenario intent of the user based on the instruction. Optionally, the electronic device 401 may send the scenario intent to the server 402. Correspondingly, after receiving the scenario intent, the server 402 may generate response information based on the scenario intent. Optionally, the server 402 may send the response information to the electronic device 401. Correspondingly, after receiving the response information, the electronic device 401 may output the response information. For example, the response information is displayed on a display, or the response information is broadcast in voice.

It should be understood that FIG. 4 is merely a simplified diagram of an example for ease of understanding. The communication system may further include another device that is not drawn in FIG. 4.

Optionally, the server 402 in embodiments of this application may be implemented through different devices. For example, the server 402 in embodiments of this application may be implemented through a device in FIG. 5. FIG. 5 is a diagram of a hardware structure of a server 402 according to an embodiment of this application. The server 402 includes at least one processor 501, a communication line 502, a memory 503, and at least one communication interface 504.

The processor 501 may be a general-purpose central processing unit (central processing unit, CPU), a microprocessor, an application-specific integrated circuit (application-specific integrated circuit, ASIC), or one or more integrated circuits configured to control execution of programs in solutions in this application.

The communication line 502 may include a path for information transmission between the foregoing components.

The communication interface 504 is configured to communicate with another device (for example, the electronic device 401 shown in FIG. 4). In embodiments of this application, the communication interface may be a module, a circuit, a bus, an interface, a transceiver, or another apparatus that can implement a communication function, and is configured to communicate with another device. Optionally, when the communication interface is the transceiver, the transceiver may be an independently disposed transmitter, and the transmitter may be configured to send information to another device. Alternatively, the transceiver may be an independently disposed receiver, and is configured to receive information from another device. Alternatively, the transceiver may be a component that integrates information sending and receiving functions. A specific implementation of the transceiver is not limited in embodiments of this application. In some embodiments of this application, the communication interface 504 may be configured to receive one or more of a scenario intent of a user, environment scenario information of the electronic device, and a user profile from the electronic device. In some other embodiments of this application, the communication interface 504 may be configured to send, to the electronic device, response information obtained based on one or more of a scenario intent of a user, environment scenario information of the electronic device, a user profile, and the like.

The memory 503 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Bluray optical disc, and the like), a magnetic disk storage medium or another magnetic storage device, or any other medium that can be used to carry or store expected program code in a form of instruction or a data structure and that can be accessed by a computer. However, the memory is not limited thereto. The memory 503 may exist independently, and is connected to the processor 501 through the communication line 502. Alternatively, the memory 503 may be integrated with the processor 501.

The memory 503 is configured to store computer-executable instructions used to implement the solutions of this application, and the processor 501 controls execution of the computer-executable instructions. The processor 501 is configured to execute the computer-executable instructions stored in the memory 503, to implement a method provided in the following embodiments of this application. For example, the processor 501 determines corresponding response information based on one or more information of the received scenario intent of the user, the received environment scenario information of the electronic device, and the received user profile.

Optionally, the computer-executable instructions in embodiments of this application may also be referred to as application code, instructions, a computer program, or another name. This is not specifically limited in embodiments of this application.

In some embodiments of this application, the memory 503 may be further configured to store one or more of a scenario intent set, an application programming interface API corresponding to a scenario intent, an AI model, an intent framework system, and the like. For detailed descriptions of the scenario intent set, the API corresponding to the scenario intent, the AI model, the intent framework system, and the like, refer to the following descriptions.

During specific implementation, in an embodiment, the processor 501 may include one or more CPUs, for example, a CPU 0 and a CPU 1 in FIG. 5.

In a specific implementation, in an embodiment, the server 402 may include a plurality of processors, such as the processor 501 and a processor 505 in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

The server 402 may be a general-purpose device or a dedicated device. A type of the server 402 is not limited in embodiments of this application. The server 402 may be a device having a structure similar to that in FIG. 5.

It may be understood that, the structures shown in embodiments of this application do not constitute a specific limitation on the server 402. In some other embodiments of this application, the server 402 may include more or fewer components than those shown in the figure, or a combination of a part of the components, or splits from a part of the components, or an arrangement of different components. The components shown in the figure may be implemented by hardware, software, or a combination of software and hardware.

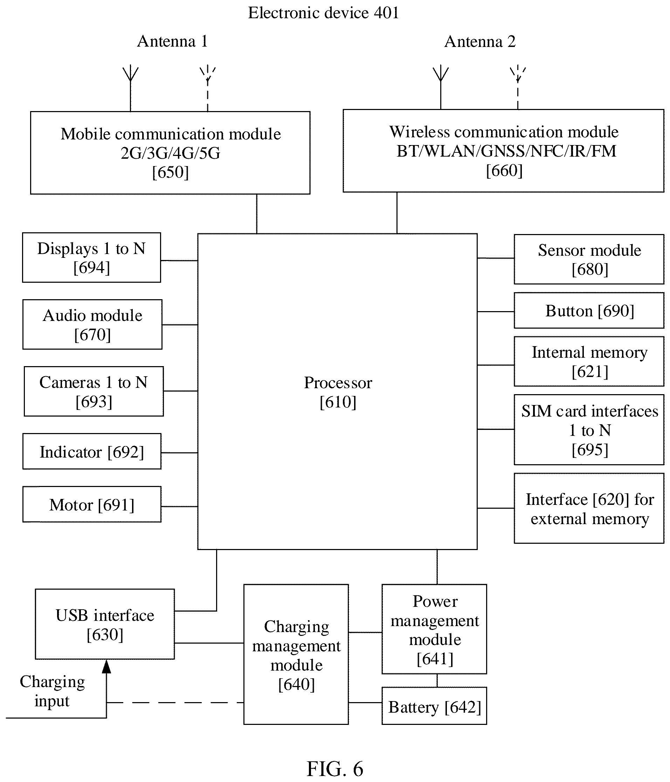

For example, the electronic device 401 is a mobile phone. FIG. 6 is a diagram of a hardware structure of an electronic device 401 according to an embodiment of this application.

The electronic device 401 includes a processor 610, an interface 620 for external memory, an internal memory 621, a universal serial bus (universal serial bus, USB) interface 630, a charging management module 640, a power management module 641, a battery 642, an antenna 1, an antenna 2, a mobile communication module 650, a wireless communication module 660, an audio module 670, a sensor module 680, a button 690, a motor 691, an indicator 692, a camera 693, a display 694, a subscriber identification module (subscriber identification module, SIM) card interface 695, and the like.

The processor 610 may include one or more processing units. For example, the processor 610 may include an application processor (Application processor, AP), a graphics processing unit (graphics processing unit, GPU), an image signal processor (image signal processor, ISP), a controller, a memory, a video codec, a digital signal processor (digital signal processor, DSP), a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 610, and is configured to store instructions and data. In some embodiments, the memory in the processor 610 is a cache. The memory may store instructions or data just used or cyclically used by the processor 610. If the processor 610 needs to use the instruction or the data again, the processor may directly call the instruction or the data from the memory. This avoids repeated access, reduces waiting time of the processor 610, and improves system efficiency.

In some embodiments, the processor 610 may include one or more interfaces.

The charging management module 640 is configured to receive a charging input from the charger. The charger may be a wireless charger or a wired charger.

The power management module 641 is configured to connect the battery 642, the charging management module 640, and the processor 610. The power management module 641 receives an input from the battery 642 and/or the charging management module 640, and supplies power to the processor 610, the memory 621, the display 694, the camera 693, the wireless communication module 660, and the like.

A wireless communication function of the electronic device 401 may be implemented through the antenna 1, the antenna 2, the mobile communication module 650, the wireless communication module 660, and the like.

The antenna 1 and the antenna 2 are configured to: transmit and receive electromagnetic wave signals. Each antenna in the electronic device 401 may be configured to cover one or more communication frequency bands. Different antennas may be further reused, to improve antenna utilization.

The mobile communication module 650 may provide a wireless communication solution that includes 2G/3G/4G/5G or the like and that is applied to the electronic device 401. The mobile communication module 650 may include at least one filter, a switch, a power amplifier, a low noise amplifier (low noise amplifier, LNA), and the like. The mobile communication module 650 may receive an electromagnetic wave through the antenna 1, perform processing such as filtering or amplification on the received electromagnetic wave, and transmit a processed electromagnetic wave to the modem processor for demodulation. The mobile communication module 650 may further amplify a signal modulated by the modem processor, and convert an amplified signal into an electromagnetic wave for radiation through the antenna 1.

The wireless communication module 660 may provide a wireless communication solution that is applied to the electronic device 401 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 660 may be one or more components integrating at least one communication processor module. The wireless communication module 660 receives an electromagnetic wave through the antenna 2, performs frequency modulation and filtering processing on the electromagnetic wave signal, and sends a processed signal to the processor 610. The wireless communication module 660 may further receive a to-be-sent signal from the processor 610, perform frequency modulation and amplification on the signal, and convert a processed signal into an electromagnetic wave for radiation through the antenna 2.

In some embodiments, in the electronic device 401, the antenna 1 is coupled to the mobile communication module 650, and the antenna 2 is coupled to the wireless communication module 660, so that the electronic device 401 can communicate with a network and another device (like the server 402 shown in FIG. 4) by using a wired communication technology or a wireless communication technology.

In some embodiments of this application, the electronic device 401 may further sense environment scenario information of the electronic device 401 through the antenna 1, the mobile communication module 650, the antenna 2, the wireless communication module 660, and the like.

The electronic device 401 may implement a display function through the GPU, the display 694, the application processor, and the like. The GPU is a microprocessor for image processing, and is connected to the display 694 and the application processor. The GPU is configured to: perform mathematical and geometric computation, and render an image. The processor 610 may include one or more GPUs, which execute program instructions to generate or change display information.

The display 694 is configured to display an image, a video, and the like. The display 694 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 401 may include one or N displays 694, where N is a positive integer greater than 1. In some embodiments of this application, the display 694 may be configured to receive an instruction entered by a user. In some other embodiments of this application, the display 694 may be further configured to display response information obtained based on the instruction entered by the user.

The electronic device 401 may implement an image shooting function through the ISP, the camera 693, the video codec, the GPU, the display 694, the application processor, and the like.

The camera 693 is configured to capture a static image or a video. In some embodiments, the electronic device 401 may include one or N cameras 693, where N is a positive integer greater than 1. In some embodiments of this application, the camera 693 may be further configured to capture an ambient image of the electronic device 401, to obtain environment scenario information of the electronic device 401.

The NPU is a neural-network (neural-network, NN) computing processor, and simulates a biological neural network structure like a transmission mode between neurons in a human brain to perform rapid processing on input information, and can perform continuous selflearning. Applications such as intelligent cognition of the electronic device 401, for example, image recognition, facial recognition, speech recognition, and text understanding, may be implemented through the NPU. In some embodiments of this application, the NPU may be configured to perform speech recognition and the like on a speech instruction entered by the user.

The interface 620 for external memory may be configured to connect to an external storage card, for example, a micro SD card, to extend a storage capability of the electronic device 401. The external storage card communicates with the processor 610 through the interface 620 for external memory, to implement a data storage function. For example, files such as music and videos are stored in the external storage card.

The internal memory 621 may be configured to store computer-executable program code. The executable program code includes instructions. The processor 610 runs the instructions stored in the internal memory 621, to perform various function applications of the electronic device 401 and data processing. The internal memory 621 may include a program storage region and a data storage region. The program storage region may store an operating system, an application required by at least one function (for example, a voice playing function or an image playing function), and the like. The data storage region may store data (such as audio data and an address book) created during use of the electronic device 401, and the like. In addition, the internal memory 621 may include a high-speed random access memory, or may include a nonvolatile memory, for example, at least one magnetic disk storage device, a flash memory device, or a universal flash storage (universal flash storage, UFS).

In some embodiments of this application, the internal memory 621 may store one or more of a scenario intent set, a user profile, and an intent framework system. For descriptions of the scenario intent set, the user profile, and the intent framework system, refer to the following descriptions.

The electronic device 401 may implement an audio function like music playing and recording through the audio module 670, the application processor, and the like.

The audio module 670 is configured to convert digital audio information into an analog audio signal for output, and is further configured to convert an analog audio input into a digital audio signal. The audio module 670 may be further configured to encode and decode an audio signal. In some embodiments, the audio module 670 may be disposed in the processor 610, or some functional modules in the audio module 670 are disposed in the processor 610.

Optionally, the audio module 670 may include at least one of a speaker, a receiver, a microphone, and a headset jack.

In some embodiments of this application, the audio module 670 may be configured to receive an instruction entered by the user. In some other embodiments of this application, the audio module 670 may be further configured to output response information obtained based on the instruction entered by the user.

Optionally, the sensor module 680 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 690 includes a power button, a volume button, and the like. The button 690 may be a mechanical button, or may be a touch button.

The motor 691 may generate a vibration prompt.

The indicator 692 may be an indicator light, and may be configured to indicate a charging state and a state of charge change, or may be configured to indicate a message, a notification, and the like.

The SIM card interface 695 is configured to connect to a SIM card.

For example, the foregoing merely uses the mobile phone as an example to describe a structure of the electronic device 401 in embodiments of this application, but does not constitute a limitation on a structure and a form of the electronic device 401. The structure and the form of the electronic device 401 are not limited in embodiments of this application. For example, the structure of the electronic device 401 may alternatively be presented in a form of the server 402 shown in FIG. 5. This application is not limited thereto.

In some other embodiments of this application, the electronic device 401 may include more or fewer components than those shown in FIG. 6, or a combination of a part of the components, or splits from a part of the components, or replacements of a part of the components, or an arrangement of different components. The components shown in the figure may be implemented by hardware, software, or a combination of software and hardware.

In some embodiments, the electronic device 401 and the server 402 may further be divided into functional modules. For example, each functional module corresponding to each function may be obtained through division, or two or more functions may be integrated into one processing unit. The integrated unit may be implemented in a form of hardware, or may be implemented in a form of software functional module.

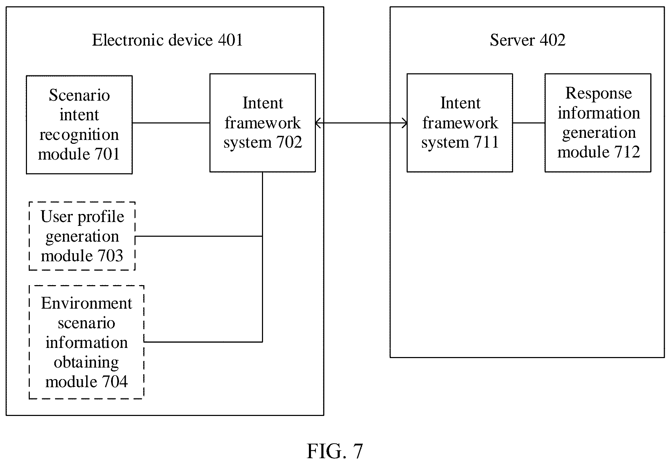

In a possible division manner, FIG. 7 is a diagram of a software structure of the electronic device 401 and a software structure of the server 402 according to an embodiment of this application.

As shown in FIG. 7, the electronic device 401 may include a scenario intent recognition module 701 and an intent framework system 702.

The scenario intent recognition module 701 may be configured to recognize whether a user instruction is a scenario intent and a specific scenario intent that the user instruction is. The user instruction may be a user instruction received by the electronic device 401. For a specific implementation of how to recognize whether a user instruction is a scenario intent and a specific scenario intent that the user instruction is, refer to the following descriptions.

The intent framework system 702 may be a system configured to implement communication between the electronic device 401 and the server 402. In some embodiments, the intent framework system 702 may be configured to send, to the server 402, the scenario intent recognized by the scenario intent recognition module 701. In another embodiment, the intent framework system 702 may be configured to receive response information from the server 402.

Optionally, the electronic device 401 may further include at least one of a user profile generation module 703 and an environment scenario information obtaining module 704.

The user profile generation module 703 may be configured to generate a user profile. For descriptions of the user profile, refer to the following descriptions. In some embodiments, the user profile may also be used to generate response information. The intent framework system 702 may be further configured to send, to the server 402, the user profile generated by the user profile generation module 703.

The environment scenario information obtaining module 704 may be configured to obtain environment scenario information. The environment scenario information may indicate at least one of an ambient environment condition of the electronic device 401, a state of the electronic device 401, and the like. In some embodiments, the environment scenario information may also be used to generate response information. The intent framework system 702 may be further configured to send, to the server 402, the environment scenario information obtained through the environment scenario information obtaining module 704.

The server 402 may include an intent framework system 711 and a response information generation module 712.

The intent framework system 711 may be a system configured to implement communication between the electronic device 401 and the server 402. In some embodiments, the intent framework system 711 may be configured to receive, from the electronic device 401, one or more of the scenario intent, an API corresponding to the scenario intent, the user profile, the environment scenario information, and the like. For details about the API corresponding to the scenario intent, refer to the following descriptions. In some other embodiments, the intent framework system 711 may be further configured to send response information to the electronic device 401.

In some other embodiments, the intent framework system 711 may be further configured to send one or more of the scenario intent, an API corresponding to the scenario intent, the user profile, the environment scenario information, and the like to the response information generation module 712. In some other embodiments, the intent framework system 711 may be further configured to receive response information from the response information generation module 712.

In some other embodiments, the intent framework system 711 may be further configured to receive a notification message of the electronic device 401, operation behavior data of the user for the response information, and the like. Optionally, the notification message of the electronic device 401, the operation behavior data of the user for the response information, and the like may be reported by a system application and/or a third-party application on the electronic device 401. For example, the notification message of the electronic device 401 may include but is not limited to various notification messages such as a weather notification, a flight delay notification, a train delay notification, a commodity discount notification, and a traffic congestion notification. In some embodiments, the intent framework system 711 may be further configured to send the notification message of the electronic device 401, the operation behavior data of the user for the response information, and the like to the response information generation module 712.

The response information generation module 712 may be configured to generate response information corresponding to the user instruction. In some embodiments, the response information generation module 712 may receive, from the intent framework system 711, one or more of the scenario intent, the API corresponding to the scenario intent, the user profile, the environment scenario information, the notification message of the electronic device 401, the operation behavior data of the user for the response information, and the like; and then generate the response information based on one or more of the scenario intent, the API corresponding to the scenario intent, the user profile, the environment scenario information, the notification message of the electronic device 401, the operation behavior data of the user for the response information, and the like. In some embodiments, the response information generation module 712 may be further configured to send the response information to the intent framework system 711.

In a specific implementation, an AI model (or referred to as a large model, or referred to as an AI large model, or the like) may be disposed in the response information generation module 712; and the response information generation module 712 may input one or more of the scenario intent, the API corresponding to the scenario intent, the user profile, the environment scenario information, the notification message of the electronic device 401, the operation behavior data of the user for the response information, and the like into the AI model, and output the response information via the AI model.

It may be understood that the AI model may be various models having understanding and text generation capabilities. For example, the AI model may be a machine learning model or a deep learning model that is obtained through training and that has a large quantity of parameters and a complex structure. A training manner of the AI model is not specifically limited in embodiments of this application.

It may be understood that software modules included in the electronic device 401 and/or the server 402 shown in FIG. 7 are merely used as a possible division manner. In practice, the electronic device 401 and/or the server 402 may include more or fewer modules, or there may be another module division manner. This is not limited in embodiments of this application.

All technical solutions involved in the following embodiments may be implemented in a device with the structure shown in FIG. 5, FIG. 6, or FIG. 7, and in a system of the architecture shown in FIG. 4.

It may be understood that each interface of the electronic device shown in this embodiment of this application is provided by using an example in which the electronic device is a mobile phone.

It may be understood that, in embodiments of this application, the electronic device and/or the server may perform some or all steps in embodiments of this application. These steps or operations are merely examples. In embodiments of this application, other operations or variations of various operations may further be performed. In addition, the steps may be performed in a sequence different from a sequence presented in embodiments of this application, and not all the operations in embodiments of this application may need to be performed.

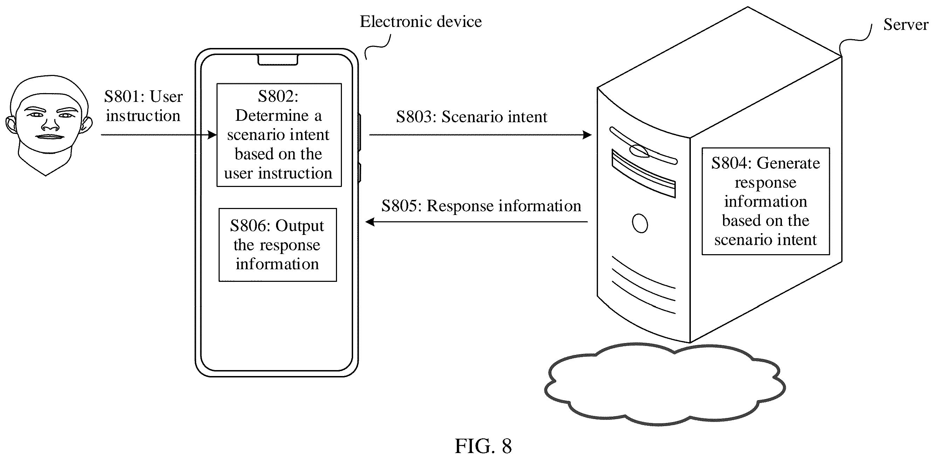

In some embodiments, the response information may be generated based on a scenario intent and an API corresponding to the scenario intent. In this embodiment, FIG. 8 is a schematic flowchart of a human-machine interaction method according to an embodiment of this application. As shown in FIG. 8, the method includes the following steps.

S801: An electronic device receives a user instruction.

For example, the user instruction (or referred to as a user operation) may include but is not limited to various types of instructions such as a speech instruction, a button instruction, and a gesture instruction that are executed by a user.

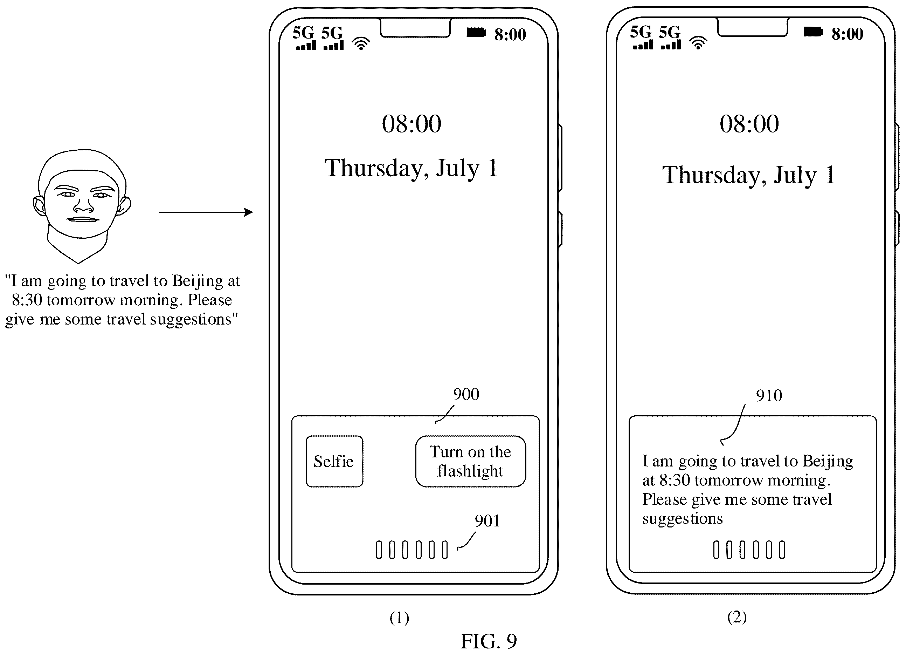

In some examples, for example, the user instruction is a speech instruction. FIG. 9 is a diagram of a scenario in which an electronic device receives a speech instruction according to an embodiment of this application. As shown in (1) in FIG. 9, the electronic device may display a speech instruction receiving interface 900. Optionally, the speech instruction receiving interface 900 may include a speech icon 901. The speech icon 901 helps the user learn that a speech instruction receiving function of the electronic device is activated. Optionally, the speech instruction receiving interface 900 may further include one or more shortcut labels, for example, "Selfie" and "Turn on the flashlight". The user may further input an instruction to the electronic device by performing an operation like tapping a shortcut label.

For example, when the electronic device displays the speech instruction receiving interface 900 shown in (1) in FIG. 9, that is, when the speech instruction receiving function is activated, if the user gives a speech instruction like "I am going to travel to Beijing at 8:30 tomorrow morning. Please give me some travel suggestions", the electronic device may receive the speech instruction. Optionally, after receiving the speech instruction, the electronic device may further output a recognized speech instruction, for example, including but not limited to outputting the recognized speech instruction in a form of text or the like. For example, the electronic device may display an instruction outputting interface 910 shown in (2) in FIG. 9, to help the user determine whether the instruction recognized by the electronic device is consistent with the instruction entered by the user.

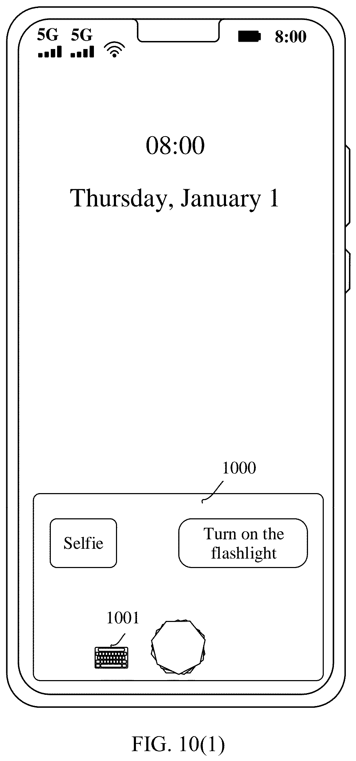

In some other examples, for example, the user instruction is a button instruction. FIG. 10(1) to FIG. 10(3) are a diagram of a scenario in which an electronic device receives a button instruction according to an embodiment of this application. As shown in FIG. 10(1), the electronic device may display a button instruction receiving interface 1000. The button instruction receiving interface 1000 includes a keyboard icon 1001. The user may call an input method application by using the keyboard icon 1001, to enter an instruction. Optionally, the button instruction receiving interface 1000 may also include one or more shortcut labels. For descriptions of these shortcut labels, refer to descriptions of the shortcut labels shown in (1) in FIG. 9. In some examples, the user may perform an operation (like tapping) on the speech icon 901 shown in (1) in FIG. 9. In response to the operation, the electronic device may display the button instruction receiving interface 1000 shown in FIG. 10(1). Certainly, the user may alternatively call the button instruction receiving interface 1000 in another manner. This is not limited in embodiments of this application.

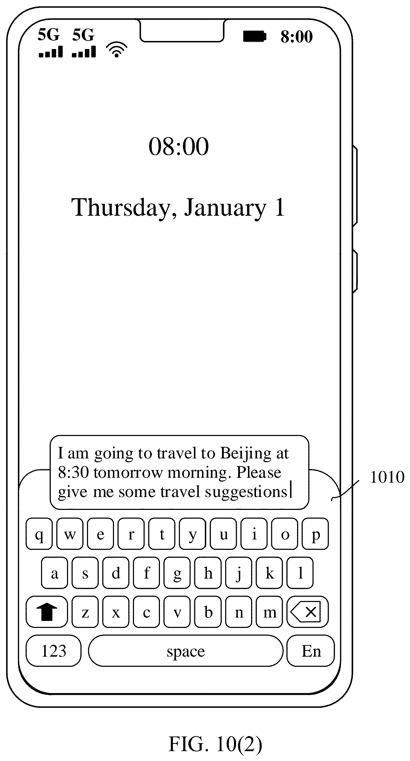

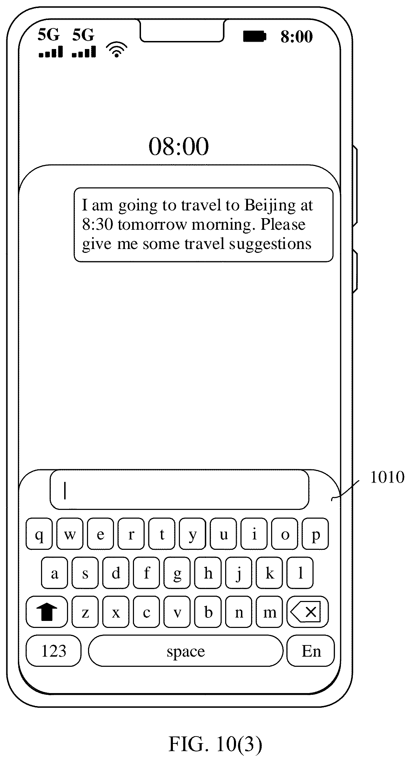

For example, the electronic device detects a tap operation performed by the user on the keyboard icon 1001 shown in FIG. 10(1). In response to the operation, the electronic device may call the input method application and display a keyboard 1010 shown in FIG. 10(2). The user may input an instruction by using the keyboard 1010. As shown in FIG. 10(2), after the user inputs a button instruction "I am going to travel to Beijing at 8:30 tomorrow morning. Please give me some travel suggestions" in an input box by using the keyboard 1010, the electronic device may receive the button instruction. Optionally, as shown in FIG. 10(3), the electronic device may further output a received button instruction, to help the user learn that the electronic device has successfully received the input instruction.

In some embodiments, before performing step S801, the electronic device may first activate a function of receiving a user instruction. In a possible implementation, the function may be in an activated state in real time, or the function is in the activated state by default after the electronic device is powered on. In this way, the user directly inputs the user instruction to the electronic device. In some other possible implementations, the function of the electronic device may be in a deactivated state. In this case, before inputting the user instruction to the electronic device, the user may further activate the function of the electronic device. For example, the user may perform a start operation. For example, the start operation may include but is not limited to a voice operation (for example, inputting a wake-up word in voice), a button operation (for example, touching and holding a power-off button), a gesture operation, or the like. In response to the start operation, the electronic device activates the function of receiving a user instruction.

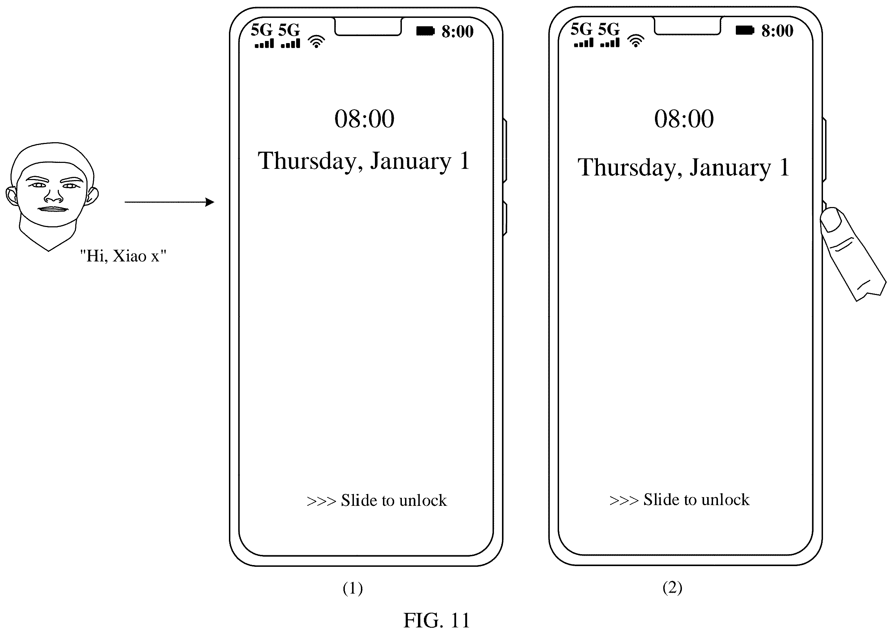

For example, FIG. 11 is a diagram of a scenario in which a function that is of receiving a user instruction and that is of an electronic device is activated according to an embodiment of this application. As shown in (1) in FIG. 11, the user inputs a wake-up word "Hi, Xiao x" to the electronic device in voice. In response to the wake-up word, the electronic device activates the function of receiving a user instruction. As shown in (2) in FIG. 11, the user touches and holds a power button of the electronic device, and in response to the operation, the electronic device may also activate the function of receiving a user instruction.

Optionally, after activating the function of receiving a user instruction, the electronic device may display the speech instruction receiving interface 900 shown in (1) in FIG. 9, or may directly display the button instruction receiving interface 1000 shown in FIG. 10(1), or the like. Optionally, the electronic device may further output a speech to respond to the user, to help the user learn that the function that is of receiving a user instruction and that is of the electronic device is activated.

Optionally, when receiving a user instruction, the electronic device may be in a screenoff state, or may be in a screen-on state. When being in the screen-on state, the electronic device may be in a screen-locked state, or may be in an unlocked state. When being in the unlocked state, the electronic device may display a running interface of any application. This is not limited in embodiments of this application.

In some scenarios, the function that is of receiving a user instruction and that is of the electronic device may be integrated into a smart voice assistant. It may be understood that the smart voice assistant may be intelligent software that has a speech recognition function and that can respond to a user instruction by using various technical means.

S802: The electronic device determines a scenario intent based on the user instruction.

In some scenarios, for a user instruction, the user instruction may correspond to a scenario intent (that is, the user instruction is an instruction used to implement the scenario intent), or may not correspond to any scenario intent (that is, the user instruction is not an instruction used to implement the scenario intent).

For example, if the user instruction is "Play a piece of music", "Pick up the call for me", "Call my mother", "Set an alarm at 6:00 a.m.", "Tell me about the climate in the north", or the like, the user instruction does not correspond to a scenario intent. If the user instruction is "I am going to travel to Beijing at 8:30 tomorrow morning. Please give me some travel suggestions", "Are there any suitable jobs available right now? I'd appreciate your recommendations", "I'm thinking of buying a refrigerator. Please give me some suggestions", "I'm heading to Shanghai for a medical appointment tomorrow. Please give me some suggestions", or the like, the user instruction corresponds to a scenario intent.

In some embodiments, the electronic device may recognize, based on a scenario intent set, whether a user instruction corresponds to a scenario intent, and when the user instruction corresponds to a scenario intent, a specific scenario intent to which the user instruction corresponds. For example, the electronic device may use the scenario intent recognition module 701 shown in FIG. 7 to recognize, based on the scenario intent set, whether a user instruction corresponds to a scenario intent, and a specific scenario intent to which the user instruction corresponds.

It may be understood that in this embodiment of this application, a scenario intent set may be a set of user intents. A user intent included in the scenario intent set is a scenario intent, and a user intent excluded in the scenario intent set is a non-scenario intent, that is, is not a scenario intent. In other words, if a user intent is located in the scenario intent set, it indicates that the user intent is a scenario intent, and if a user intent is not located in the scenario intent set, it indicates that the user intent is not a scenario intent.

In this embodiment of this application, a user intent included in the scenario intent set is referred to as a scenario intent. In some embodiments, the scenario intent set may include a plurality of scenario intents, and different scenario intents may indicate requirements of the user in different scenarios.

For example, the scenario intent set may include but is not limited to one or more scenario intents in the following: a travel intent, a medical treatment intent, a learning and education intent, a health and fitness intent, a shopping and consumption intent, a job and career intent, and the like. It may be understood that the scenario intents in this embodiment of this application are merely example descriptions provided for ease of understanding of this embodiment of this application. In practice, more or fewer scenario intents, or other types of scenario intents may be included.

In some implementations, the scenario intent set may be delivered by a server to the electronic device. Optionally, before performing step S802, the electronic device may receive the scenario intent set delivered by the server. Optionally, before performing step S801, or after performing step S801 and before performing step S802, the electronic device may receive the scenario intent set delivered by the server. In another implementation, the scenario intent set may alternatively be obtained by the electronic device in another manner. This is not limited in embodiments of this application.

In this embodiment, in a specific implementation, the electronic device may determine, based on a keyword corresponding to a scenario intent included in the scenario intent set, whether a user instruction corresponds to the scenario intent. If a user instruction includes a keyword corresponding to a scenario intent in the scenario intent set, the user instruction corresponds to the scenario intent. If a user instruction does not include a keyword corresponding to any scenario intent in the scenario intent set, the user instruction does not correspond to the scenario intent.

For example, it is assumed that the scenario intent set includes a travel intent, and keywords corresponding to the travel intent include "travel", "tourism", "traveling", and the like. If a user instruction includes any one of the keywords "travel", "tourism", "traveling", and the like, it indicates that the user instruction corresponds to the travel intent. For example, if the user instruction is "I am going to travel to Beijing at 8:30 tomorrow morning. Please give me some travel suggestions", and the user instruction includes keywords "tourism" and "travel", it indicates that the user instruction corresponds to the travel intent.

For another example, it is assumed that the scenario intent set includes a shopping and consumption intent, and keywords corresponding to the shopping and consumption intent include "purchase", "buy", "shopping", and the like. If a user instruction includes any one of the keywords "purchase", "buy", "shopping", and the like, it indicates that the user instruction corresponds to the shopping and consumption intent. For example, if the user instruction is "I'm thinking of buying a refrigerator. Please give me some suggestions", and the user instruction includes the keyword "buy", it indicates that the user instruction corresponds to the shopping and consumption intent.

For another example, it is assumed that the scenario intent set includes a job and career intent, and keywords corresponding to the job and career intent include "job", "career", "employment", and the like. If a user instruction includes any one of the keywords "job", "career", "employment", and the like, it indicates that the user instruction corresponds to the job and career intent. For example, if the user instruction is "Are there any suitable jobs available right now? I'd appreciate your recommendations", and the user instruction includes the keyword "job", it indicates that the user instruction corresponds to the job and career intent.

If the electronic device determines that the received user instruction corresponds to a specific scenario intent, the electronic device may perform step S803 and subsequent steps. If the electronic device determines that the received user instruction corresponds to a non-scenario intent, the electronic device may not perform step S803 and subsequent steps. In some embodiments, the electronic device may not respond. In some other embodiments, the electronic device may output response information corresponding to the non-scenario intent, or the like. This is not limited in this application.

S803: The electronic device sends the scenario intent to the server. Correspondingly, the server receives the scenario intent from the electronic device.

For example, the electronic device may send the scenario intent to the server through the intent framework system 702 shown in FIG. 7. Correspondingly, the server may receive the scenario intent from the electronic device through the intent framework system 711 shown in FIG. 7.

In some embodiments, the electronic device may first determine a scenario intent corresponding to the user instruction, and then send the corresponding scenario intent to the server. For example, the user instruction is "I am going to travel to Beijing at 8:30 tomorrow morning. Please give me some travel suggestions". The electronic device recognizes that the user instruction is the travel intent, and the electronic device may send the "travel intent" to the server.

Optionally, in this embodiment, the electronic device may further send some key information corresponding to the recognized scenario intent to the server. For example, the travel intent is used as an example. Key information corresponding to the travel intent may include but is not limited to one or more of a travel place, a quantity of travelers, departure time, and the like. For another example, the medical treatment intent is used as an example. Attribute information of the medical treatment intent may include but is not limited to one or more of a medical treatment place, departure time, and the like. For another example, the shopping and consumption intent is used as an example. Attribute information of the shopping and consumption intent may include but is not limited to a category of a purchased product, and the like. Optionally, the key information corresponding to the scenario intent may be obtained based on the user instruction.

In some other embodiments, the electronic device may send, to the server, both the user instruction and the scenario intent recognized based on the user instruction. Optionally, in this embodiment, the electronic device may not send the key information corresponding to the scenario intent.

It may be understood that an operation of determining the scenario intent based on the user instruction may be performed by the electronic device, or may be performed by the server. For example, the server may determine the scenario intent based on the received user instruction. Optionally, the server may alternatively recognize the user instruction in a same manner as the electronic device, for example, recognize based on the scenario intent set, to determine the scenario intent.

Certainly, the electronic device may send the user instruction to a device other than the server, and the device determines the scenario intent based on the user instruction, and then sends the scenario intent to the server directly or indirectly. Optionally, the device may alternatively recognize the user instruction in a same manner as the electronic device, for example, recognize based on the scenario intent set, to determine the scenario intent. Optionally, when the device does not store the scenario intent set, the device may further obtain the scenario intent set from the electronic device and/or the server.

S804: The server generates response information based on the scenario intent.

In some embodiments, the server may generate the response information based on the scenario intent and an API corresponding to the scenario intent. For example, the server may generate the response information based on the scenario intent and the API corresponding to the scenario intent through the response information generation module 712 in FIG. 7.

In some embodiments, the server stores the scenario intent set, and an API corresponding to each scenario intent included in the scenario intent set. Optionally, each scenario intent may correspond to one or more APIs, and a part or all of the one or more APIs may be used to output, to the user, a result of calling the one or more APIs after the corresponding scenario intent is received. A same function or different functions of one or more applications may be implemented by calling different APIs, and the function may be used to meet a possible requirement of the user under the scenario intent.

In some embodiments, an API corresponding to each scenario intent included in the scenario intent set may be set based on a possible requirement of the user under the corresponding scenario intent. In some embodiments, an API corresponding to each scenario intent included in the scenario intent set may be an API supported by the electronic device. In other words, the electronic device may successfully call the API corresponding to each scenario intent included in the scenario intent set.

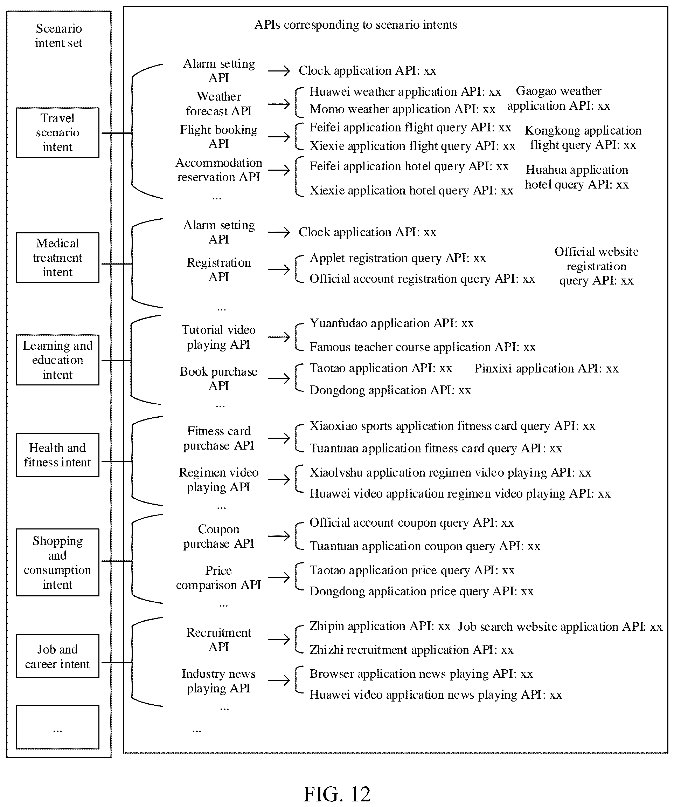

For example, FIG. 12 shows examples of APIs corresponding to some scenario intents according to an embodiment of this application. For example, the travel intent is used as an example. APIs corresponding to the travel intent may include an alarm setting API, a weather forecast API, a flight booking API, and an accommodation reservation API. The alarm setting API may include but is not limited to APIs that are of various applications and/or applets and that can implement an alarm setting function, for example, a clock application API. The weather forecast API may include but is not limited to APIs that are of various applications and/or applets and that can implement a weather forecast function, for example, a Huawei weather application API, a Gaogao weather application API, and a Momo weather application API. The flight booking API may include but is not limited to APIs that are of various applications and/or applets and that can implement a flight booking function, for example, a Feifei application flight query API, a Xiexie application flight query API, and a Kongkong application flight query API. The accommodation reservation API may include but is not limited to APIs that are of various applications and/or applets and that can implement an accommodation reservation function, for example, a Feifei application hotel query API, a Xiexie application hotel query API, and a Huahua application hotel query API. For descriptions of APIs corresponding to other scenario intents, refer to descriptions of the APIs corresponding to the travel intent.

It may be understood that the APIs corresponding to the scenario intents in this embodiment of this application are merely example descriptions for ease of this embodiment of this application. In practice, more or fewer APIs, or other types of APIs may be included.

In a specific embodiment, the server may first determine, based on the API corresponding to each scenario intent included in the stored scenario intent set and the scenario intent received from the electronic device, the API corresponding to the received scenario intent, and then input the API corresponding to the received scenario intent and the received scenario intent into an AI model, to output the response information via the AI model. For descriptions of the AI model, refer to the foregoing descriptions. In this way, the response information is output via the AI model, so that accurate and rich response information can be obtained.

In some specific implementations, the server may input the received scenario intent and the API corresponding to the received scenario intent into the AI model through the intent framework system 711 shown in FIG. 7. The server may further send, to the intent framework system 711 shown in FIG. 7, the response information output via the AI model.

Certainly, in another embodiment, the server may not perform an operation of determining, based on the API corresponding to each scenario intent included in the stored scenario intent set and the scenario intent received from the electronic device, the API corresponding to the received scenario intent, but directly input the API corresponding to each scenario intent included in the stored scenario intent set and the received scenario intent into the AI model, to output the response information via the AI model.

In some embodiments, with reference to descriptions of step S803, when the scenario intent received by the server is the scenario intent recognized based on the user instruction, and the server also receives the user instruction or key information corresponding to the scenario intent, the server may further input the user instruction or the key information corresponding to the scenario intent into the AI model, to output the response information via the AI model. In this way, the response information is obtained with reference to the user instruction or the key information of the scenario intent, so that accuracy of the obtained response information can be improved.

In some embodiments, the response information may include but is not limited to one or more APIs. One or more functions may be implemented by calling the one or more APIs, and the one or more functions may meet a possible requirement of the user under the scenario intent. Optionally, the API included in the response information may be a part or all of the APIs corresponding to the scenario intent stored in the server. In this way, the response information may include a plurality of APIs, and a plurality of functions may be implemented by calling the plurality of APIs. The plurality of functions may meet a requirement that exists under the scenario intent entered by the user, so that richer and more comprehensive response information is provided for the user. This can improve a human-machine dialog effect.

Optionally, the response information may further include a multi-modal display manner of a result of calling each API. It may be understood that the multi-modal display manner may be a manner of displaying a result of calling the one or more APIs by integrating a plurality of media types (for example, including but not limited to a text, an image, a video, and an audio). In this way, results of calling a plurality of APIs are displayed in the multi-modal display manner, so that the response information can be richer and more intuitive.

For example, the scenario intent is the travel intent. The generated response information may include one or more of the alarm setting API (for example, the alarm application API), the flight booking API (for example, the Feifei application flight query API), and the accommodation reservation API (for example, the Xiexie application hotel query API, the Feifei application hotel query API, and the Huahua application hotel query API). The multi-modal display manner of results of calling these APIs is displaying in text, picture, and video. In addition, a video may further support speech instruction playing.

For another example, the scenario intent is the shopping and consumption intent. The generated response information may include one or more of the shopping API (for example, a Taotao application API, a Dongdong application API, and a Pinxixi application API), a coupon purchase API (for example, an official account coupon query API and a Tuantuan application coupon query API), a price comparison API (for example, a Taotao application price query API and a Dongdong application price query API), and a product review API (for example, a Xiaolvshu application product review display API). The multi-modal display manner of results of calling these APIs is displaying in text, picture, and voice.

For another example, the scenario intent is the job and career intent. The generated response information may include one or more of a recruitment API (for example, a Zhipin application API and a job search website application API), a career development information browsing API (for example, a browser application career development information search API), and an industry news playing API (for example, a Huawei video application news playing API). The multi-modal display manner of calling these APIs is displaying in text, picture, and video.

Optionally, the response information may further include some texts in a fixed format, a preset picture, and the like. The text in the fixed format may be used as a response statement of the user instruction, to make the response information more complete. For example, the text in the fixed format may be "OK" or "The following is an xx planning suggestion".

S805: The server sends the response information to the electronic device. Correspondingly, the electronic device receives the response information from the server.

For example, the server may send the response information to the electronic device through the intent framework system 711 shown in FIG. 7. Correspondingly, the electronic device may receive the response information from the electronic device through the intent framework system 702 shown in FIG. 7.

S806: The electronic device outputs the response information.

For example, the electronic device may display the response information on a display, or may broadcast the response information through a microphone, an earpiece, or a headset connected to the electronic device. It may be understood that, in this embodiment of this application, that the electronic device outputs the response information may mean that the electronic device outputs corresponding information based on content in the response information to respond to the user instruction, and does not mean that information output by the electronic device is definitely information that is completely the same as the content in the response information. For example, if the response information includes an API, the information output by the electronic device may be a result of calling the API.

In some embodiments, a display effect of the result of calling the API in the response information output by the electronic device may be determined by the server. For example, as described above, the response information may include a multi-modal display manner of the result of calling the API, and the electronic device may output, in the multi-modal display manner included in the response information, the result of calling the API included in the response information. In this way, the server determines the display manner of the result of calling the API, the electronic device directly performs corresponding display in the display manner determined by the server, and there is no need to additionally perform an operation of determining the display manner of the result of calling the API, so that power consumption of the electronic device can be reduced. In addition, computing power of the server is higher than computing power of the electronic device. In this way, a better display manner can be obtained, so that the display manner of the result of calling the API meets a current scenario intent, and a display effect of the result of calling the API can be further improved.

In some other embodiments, the display effect of the result of calling the API in the response information output by the electronic device may be determined by the electronic device. For example, after receiving the API included in the response information, the electronic device may also set a multi-modal display manner of the result of calling the one or more APIs, and then output the result of calling the one or more APIs in the set multi-modal display manner. Optionally, in this embodiment, the response information received by the electronic device may include the multi-modal display manner determined by the server, or may not include the multi-modal display manner determined by the server.

In a possible implementation, the electronic device may randomly set the multi-modal display manner. In another possible implementation, the electronic device may set the multi-modal display manner based on environment scenario information of the electronic device. The environment scenario information may indicate at least one of an ambient environment condition of the electronic device and a state of the electronic device. Based on this design, the electronic device sets the multi-modal display manner of the API based on the environment scenario information, to make the set display result of the API correspond to the current environment scenario information. Different display effects can be implemented in different environment scenario information, to better meet a user requirement.

For example, the environment scenario information may include but is not limited to one or more of a quietness degree of an environment in which the electronic device is located, a location and/or scenario in which the electronic device is located, a communication manner used by the electronic device, whether Bluetooth of the electronic device is enabled, a state of charge of the electronic device, and the like. For example, the quietness degree of the environment in which the electronic device is located may be quiet or noisy. The scenario in which the electronic device is located may include but is not limited to a home scenario, an in-vehicle scenario, a shopping mall scenario, a bookstore scenario, a subway station scenario, a company scenario, a restaurant scenario, and the like. A communication manner used by the electronic device may include but is not limited to a Wi-Fi network, a 5G network, a 4G network, and the like.

For example, if the electronic device is in a noisy environment, because the user may not hear or focus on video or audio content, the user may be more inclined to read a text or view a picture. In this case, the multi-modal display manner used by the electronic device may be a manner of displaying a combination of a text and a picture. In other words, the electronic device may display, in the manner of a combination of a text and a picture, the result of calling the API included in the response information.

For another example, if the electronic device is in a quiet environment, the user may be more inclined to watch video content or listen to audio content. In this case, the multi-modal display manner used by the electronic device may be a manner of displaying a combination of a video and an audio. In other words, the electronic device may display, in the manner of a combination of a video and an audio, the result of calling the API in the response information.

Optionally, the environment scenario information of the electronic device may be collected by the electronic device. For example, the electronic device may obtain the environment scenario information of the electronic device by collecting various information such as audio information, positioning information, environment image information, and geofence information. Alternatively, the environment scenario information of the electronic device may be determined by another device and then sent to the electronic device. Certainly, the electronic device may alternatively cooperate with another device to obtain the environment scenario information of the electronic device. This is not limited in this application.

In some implementations, the electronic device may output the response information in the multi-modal display manner by using an artificial intelligence generated content (artificial intelligence generated content, AIGC) technology. Certainly, the electronic device may output the response information in the multi-modal display manner by using another technology. This is not limited in embodiments of this application.

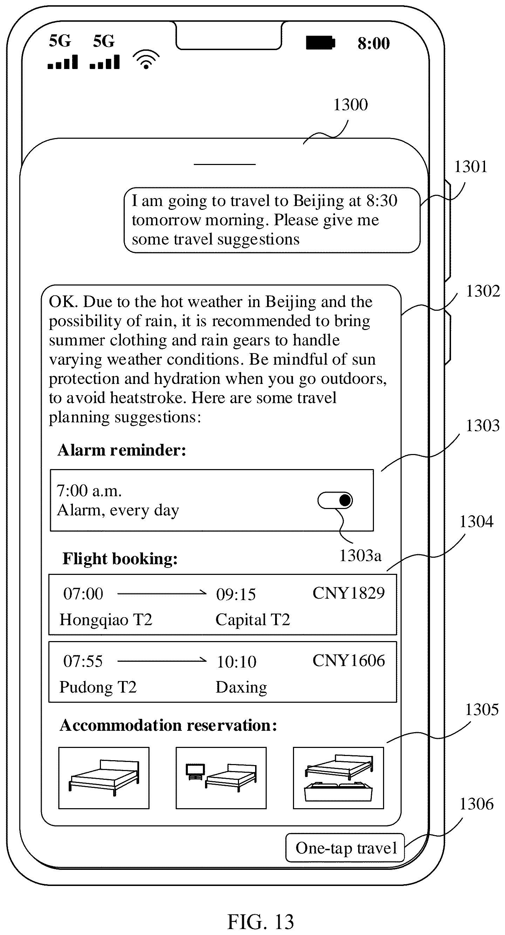

For example, with reference to the user instructions shown in FIG. 9, FIG. 10(1) to FIG. 10(3), and the like, FIG. 13 is a diagram of an interface of response information output by an electronic device according to an embodiment of this application. As shown in FIG. 13, the electronic device may display a response interface 1300. The response interface 1300 includes a widget 1302, and the widget 1302 may be configured to display a result of calling an API included in the response information. Optionally, the response interface 1300 may further include a user instruction 1301.

For example, the widget 1302 includes a result 1303 of calling the alarm setting API, a result 1304 of calling the flight booking API, and a result 1305 of calling the accommodation reservation API. It may be understood that the alarm setting API may be an API that is of an application and that implements an alarm setting function, the flight booking API may be an API that is of an application and that implements a flight booking function, and the accommodation reservation API may be an API that is of an application and that implements an accommodation reservation function.

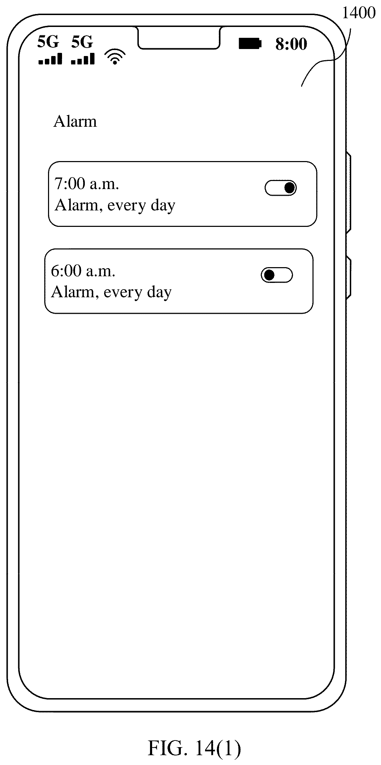

The alarm setting function may be implemented through the result 1303 of calling the alarm setting API. In some examples, when displaying the result 1303 of calling the alarm setting API, the electronic device may automatically set an alarm for the user. For example, a function button 1303a is on. In this way, the electronic device has preset an alarm at 7:00 a.m. for the user. In some other examples, when displaying the result of calling the alarm setting API, the electronic device does not preset an alarm for the user. In this case, the user may preset an alarm by himself or herself. For example, the user may directly turn on the function button 1303a. In this way, the user may preset an alarm at 7:00 a.m. Alternatively, the user may perform an operation (like tapping) on the result 1303 of calling the alarm setting API. In response to the operation, as shown in FIG. 14(1), the electronic device may display an alarm interface 1400, and the user may preset a proper alarm on an alarm interface 1400.

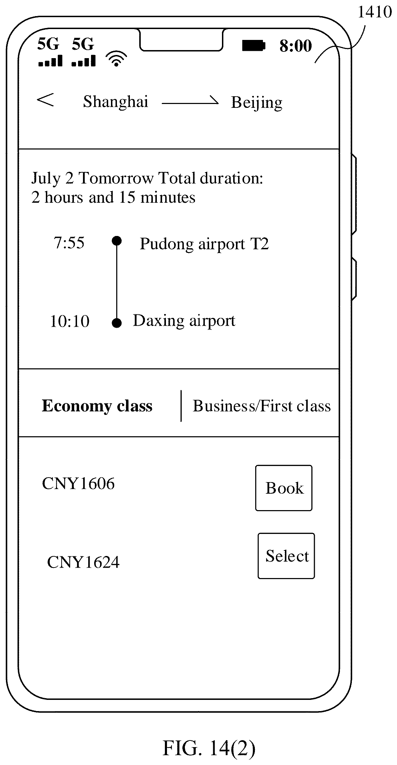

The flight booking function may be implemented through the result 1304 of calling the flight booking API. In some examples, the electronic device may display information of one or more flights through the result 1304 of calling the flight booking API, and the user may select a proper flight based on the displayed information of the one or more flights. For example, if the electronic device detects an operation of selecting information about one of the flights by the user, for example, the user performs an operation (like tapping) on information about any flight included in the result 1304 of calling the flight booking API. In response to the operation, as shown in FIG. 14(2), the electronic device may display a booking interface 1410 of the flight. The user may complete booking of the corresponding flight on the booking interface 1410. Optionally, the booking interface 1410 may be a settlement interface of the flight, or may be another interface of the flight, for example, an economy class or first class selection interface (for example, as shown in FIG. 14(2)). This is not specifically limited in embodiments of this application.

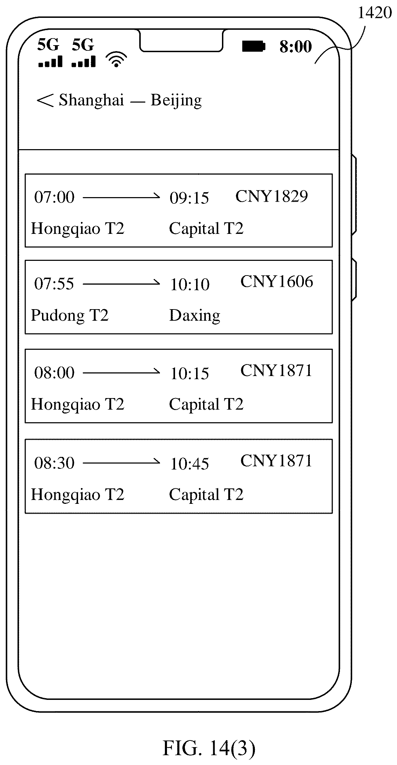

In some other examples, the user may further view information about more flights through the result 1304 of calling the flight booking API. For example, the user may perform an operation (like tapping) on the result 1304 of calling the flight booking API. In response to the operation, as shown in FIG. 14(3), the electronic device may display a flight display interface 1420. The user may select a proper flight for booking on the flight display interface 1420.

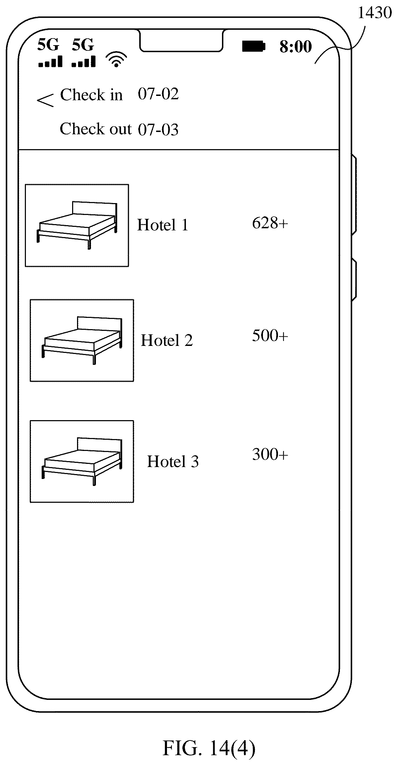

The accommodation reservation function may be implemented through the result 1305 of calling the accommodation reservation API. In some examples, the electronic device may display, through the result of calling the accommodation reservation API, information about one or more hotels that can be reserved, including but not limited to a hotel picture (for example, as shown in FIG. 13), a hotel video, a hotel location, and the like. The user may view more hotels through the result 1305 of calling the accommodation reservation API. In some examples, the user may perform an operation (like tapping) on the result 1305 of calling the accommodation reservation API. In response to the operation, as shown in FIG. 14(4), the electronic device may display a hotel reservation interface 1430. The user may select a proper hotel for reservation on the hotel reservation interface 1430.

In some other examples, the user may alternatively select a proper hotel based on information that is about one or more hotels that can be reserved and that is displayed through the result of calling the accommodation reservation API. For example, if the electronic device detects an operation (like tapping) of the user on information about a hotel, in response to the operation, the electronic device may display a reservation interface of the hotel, and the user may select a proper room for reservation on a reservation interface of the hotel.

Optionally, the widget 1302 may further include texts that remind the user of weather situations such as "Due to the hot weather in Beijing and the possibility of rain, it is recommended to bring summer clothing and rain gears to handle varying weather conditions. Be mindful of sun protection and hydration when you go outdoors, to avoid heatstroke"; and/or texts in a fixed format such as "OK" and "Here are some travel planning suggestions".

Optionally, the widget 1302 may further include a button used to implement a function of one or more results of calling APIs included in the widget 1302, for example, a one-tap travel button 1306. The electronic device detects an operation performed by the user on the one-tap travel button 1306, for example, tapping. In response to the operation, the electronic device may preset an alarm (for example, a 7:00 alarm) displayed in the result 1303 of calling the alarm setting API, and/or the electronic device may select to book a flight displayed in the result 1304 of calling the flight booking API, and/or the electronic device may select to reserve a hotel displayed in the result 1305 of calling the accommodation reservation API. Optionally, the electronic device may further display a settlement page of a flight ticket, a hotel, or the like, or may directly display a page indicating that booking succeeds, or the like.

Based on the foregoing technical solution, after receiving the user instruction, the electronic device may obtain the response information based on the scenario intent recognized based on the user instruction. The response information includes a plurality of APIs. The plurality of APIs may be called to implement a plurality of functions. The plurality of functions may be used to meet a requirement of the user under the scenario intent. Based on the scenario intent, results of calling the plurality of APIs are provided for the user to implement different functions. The results of calling the APIs are displayed in a multi-modal display manner, to implement recommendation of richer, more comprehensive, more convenient, and more intuitive response information, so as to meet a user requirement, and improve a human-machine dialog effect.

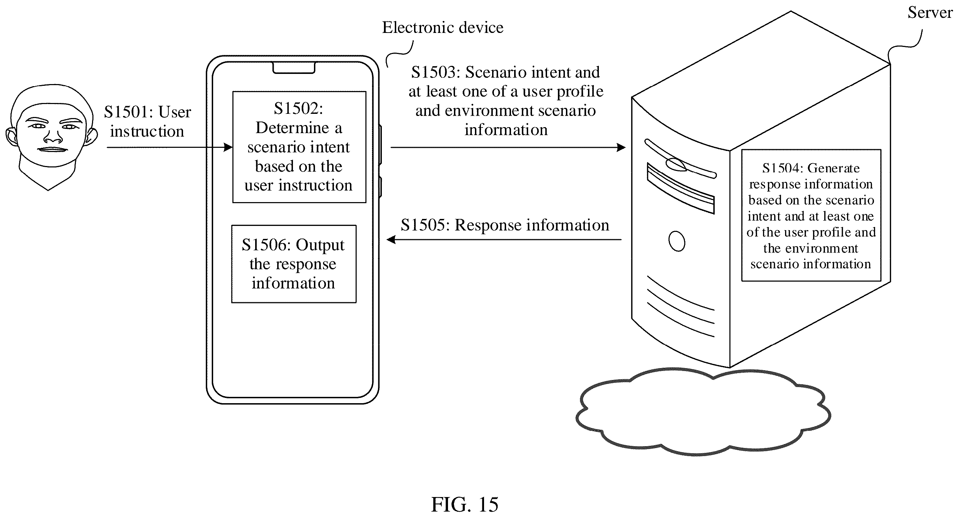

In some other embodiments, the response information may be generated based on a scenario intent, an API corresponding to the scenario intent, and at least one of a user profile and environment scenario information of the electronic device. In this embodiment, FIG. 15 is a schematic flowchart of another human-machine interaction method according to an embodiment of this application. As shown in FIG. 15, the method includes the following steps.

S1501: An electronic device receives a user instruction.

S1502: The electronic device determines a scenario intent based on the user instruction.

For descriptions of step S1501 and step S1502, refer to related descriptions of step S801 and step S802 shown in FIG. 8.

S1503: The electronic device sends the scenario intent and at least one of a user profile and environment scenario information to a server. Correspondingly, the server receives the scenario intent and at least one of the user profile and the environment scenario information from the electronic device.

It may be understood that the user profile may be a digital profile abstracted from an actual user based on behavior data of the user, and the digital profile may include one or more user tags. The user tag may be understood as an abstract classification and summary of some behavior features of the user.

For example, if the user frequently uses the electronic device to watch an animation after midnight, "night owl" and "ACG" are used as user tags of the user. For another example, if the user frequently uses the electronic device to take a taxi from a company to home at 10:00 p.m., "workaholic" may be used as a user tag of the user. For another example, if the user frequently purchases books related to law from a shopping software, a major of the user is law, and the user frequently reads law papers, the electronic device may use "law" as a user tag of the user. The foregoing user tags may all be used to construct the user profile of the user.

In some scenarios, when the user does not input any user instruction corresponding to the scenario intent to the electronic device, there is no historical scenario intent corresponding to the user, no response information corresponding to the historical scenario intent, and no operation behavior of the user on the response information in the electronic device or another device. It may be understood that, in this embodiment of this application, the historical scenario intent may be a scenario intent recognized by the electronic device based on the user instruction before the electronic device generates the user profile.

In this scenario, in some embodiments, one or more user tags may be generated based on the behavior data of the user. The behavior data of the user may be behavior data generated before the electronic device receives the user instruction corresponding to the scenario intent. For example, the behavior data of the user may be generated based on an operation record of the user on the electronic device. The behavior data of the user may be stored in the electronic device, or may be stored in the another device.

Optionally, in this embodiment, different users may correspond to different user profiles.

In some examples, the electronic device may generate one or more user tags based on the behavior data of the user. In some other examples, the another device may generate one or more user tags based on the behavior data of the user, and the electronic device may obtain the one or more user tags from the another device.

Further, in some examples, the electronic device may generate the user profile based on a part or all of the one or more user tags. In some other examples, the another device (for example, the server) may generate the user profile based on a part or all of the one or more user tags.

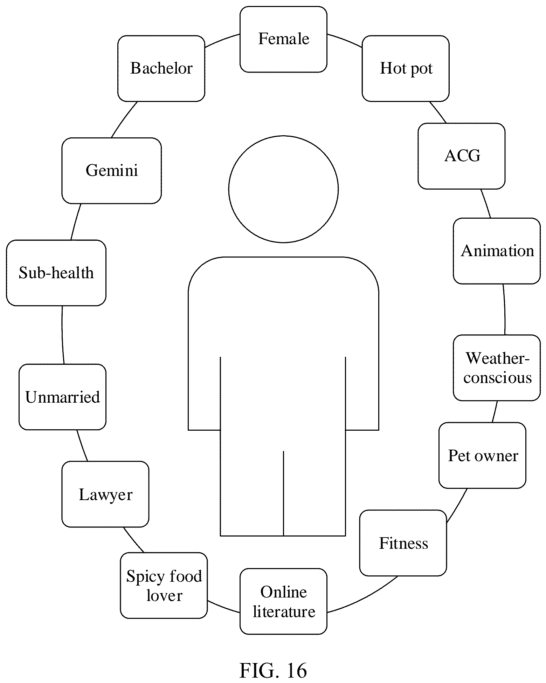

For example, FIG. 16 is a diagram of a user profile according to an embodiment of this application. The user profile includes the following user tags: female, bachelor, Gemini, sub-health, unmarried, lawyer, spicy food lover, online literature, fitness, pet owner, weather-conscious, animation, ACG, hot pot, and the like. It may be understood that the user tags shown in FIG. 16 may be merely some examples, and the user profile may further include another user tag.

In some other embodiments, the user profile may be a user profile generated by collecting statistics on behavior data of different users. For example, the electronic device and/or the another device may generate one or more user tags based on behavior data of different users. Further, the electronic device and/or the another device may generate a user profile based on a part or all of the one or more user tags.

For example, if 80% of users prefer traveling by high-speed rail, 10% of users prefer traveling by train, and 10% of users prefer traveling by air, "prefer traveling by high-speed rail" is used as a user tag of the users. For another example, if 90% of users prefer a hotel, and 20% of users prefer a homestay, "prefer a hotel" is used as a user tag of the users. For another example, if 70% of users frequently choose to travel with another person, and 30% of users frequently choose to travel alone, "prefer traveling alone" is used as a user tag of the users. The foregoing user tags may be used to construct the user profile of the users.

Optionally, in this embodiment, different users may correspond to a same user profile.

In some other scenarios, after the user inputs a user instruction corresponding to one or more scenario intents to the electronic device, one or more of a historical scenario intent, response information corresponding to the historical scenario intent, and an operation behavior of the user on the response information may be stored in the electronic device or the another device. It may be understood that the operation behavior of the user on the response information may include but is not limited to an operation record of the user on a result of calling an API included in the response information.

Optionally, the historical scenario intent, the response information corresponding to the historical scenario intent, the operation behavior of the user on the response information, and the like may be stored in the intent framework system 702 and/or the intent framework system 711 shown in FIG. 7. For example, after sending the scenario intent to the server, and receiving response information of the scenario intent from the server, the intent framework system 702 may store the scenario intent and the response information corresponding to the scenario intent. The stored scenario intent is the historical scenario intent, and the response information is the response information corresponding to the historical scenario intent. Optionally, the operation behavior of the user on the response information may be reported to the intent framework system 702 and/or the intent framework system 711 by using a system application and/or a third-party application. For example, after the user performs an operation on the result of calling the API included in the response information, an application (for example, the system application or the third-party application) corresponding to the API may collect an operation behavior of the user, and report the operation behavior to the intent framework system 702 and/or the intent framework system 711.

In this scenario, in some embodiments, the electronic device and/or the another device (for example, including but not limited to the server) may generate the user profile based on one or more of the historical scenario intent, the response information corresponding to the historical scenario intent, and the operation behavior of the user on the response information. For example, the electronic device and/or the another device may determine one or more user tags based on one or more of the historical scenario intent, the response information corresponding to the historical scenario intent, and the operation behavior of the user on the response information, and further generate the user profile based on a part or all of the one or more user tags. In this way, the user profile is generated based on the historical scenario intent, the response information corresponding to the historical scenario intent, and the operation behavior of the user on the response information (for example, an operation of the user on the result of calling the API included in the response information, for example, setting the result of calling the API), so that the generated user profile can reflect a real preference or requirement of the user under the one or more scenario intents, and further response information of the user under a scenario intent is determined based on the user profile that can reflect the real preference or requirement of the user under the one or more scenario intents. This makes the response information better meet the requirement of the user under the scenario intent, and improves accuracy and pertinence of the response information.

For example, under a travel intent, if the user frequently presets an alarm for after 7:00 a.m., frequently chooses a first-class seat, frequently flies with an xx airline, frequently books a homestay, frequently chooses to travel with one companion, and most frequently books a sea-view room, "dislike waking up before 7:00", "prefer a comfortable seat", "prefer flying with an xx airline", "prefer a homestay", "prefer traveling with one companion", and "prefer a sea-view room" may be used as user tags. For example, under a shopping and consumption intent, if the user frequently purchases jade, frequently watches videos of pet dogs, spends about 1000 each time, and frequently goes to xx shopping mall, "prefer jade", "prefer a pet dog", "spend about 1000 each time", and "prefer going to xx shopping mall" may be used as user tags. For another example, under a job and career intent, if the user frequently queries programming-related materials, frequently applies for a front-end development job, consistently applies for a job in Beijing, and frequently purchases books related to the computer field, "good at programming", "prefer a front-end development job", and "job location preference: Beijing" may be used as user tags. The foregoing user tags may all be used to construct the user profile of the user as well.

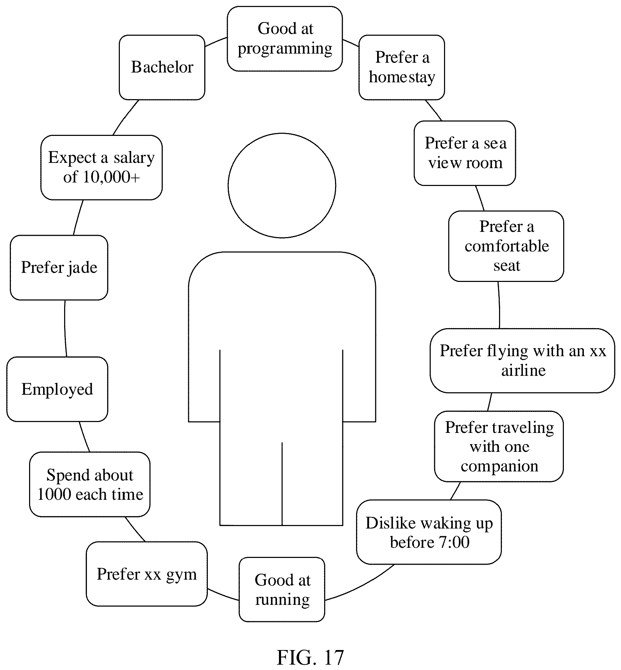

For example, FIG. 17 is a diagram of another user profile according to an embodiment of this application. The user profile includes user tags such as "bachelor", "good at programming", and "prefer a homestay". Details are not described herein again. It may be understood that the user tags shown in FIG. 17 may be merely some examples, and the user profile may further include another user tag.

Optionally, in this embodiment, the electronic device and/or another device may further determine more user tags with reference to other behavior data of the user, to determine the user profile. In this way, the obtained user profile can be more comprehensive and accurate.

Optionally, in this embodiment, different users may correspond to different user profiles. In this way, under a same scenario intent, user profiles corresponding to different users are different, and further, response information output based on different user profiles is also different. In other words, different response information can be recommended for different users, so that requirements of various users can be flexibly met, and homogenization of generated response information can be avoided.

Optionally, because behaviors of the user may be different in different periods, that is, the user may have different preferences in different periods, the foregoing user tags may be periodically updated or dynamically updated. Correspondingly, the user profile including the user tags may also be periodically updated or dynamically updated. A specific update occasion and an update manner are not limited in this application. In this way, the user profile is updated based on a current preference of the user, so that a more accurate user profile can be obtained, and more accurate response information can be obtained when the response information is determined based on the user profile.

In some embodiments, when there is no user profile like that shown in FIG. 17, the user profile in step S1503 may be a user profile like that shown in FIG. 16. When there is a user profile like that shown in FIG. 17, the user profile in step S1503 may be a user profile like that shown in FIG. 17. Certainly, when there are user profiles such as those shown in FIG. 16 and FIG. 17, the user profile shown in FIG. 17 may be used. The user profile shown in FIG. 17 can better indicate a real requirement of the user. Therefore, the user profile is used, so that recommended response information is more accurate.

For descriptions of the environment scenario information in step S1503, refer to the descriptions of the environment scenario information in step S806 shown in FIG. 8.

For example, the electronic device may send the scenario intent and at least one of the user profile and the environment scenario information to the server through the intent framework system 702 shown in FIG. 7. Correspondingly, the server may receive the scenario intent and at least one of the user profile and the environment scenario information from the electronic device through the intent framework system 711 shown in FIG. 7.

In a specific embodiment, the intent framework system 702 may send the scenario intent and at least one of the user profile and the environment scenario information to the server through a preset data structure. To be specific, the intent framework system 702 may send first information including the scenario intent and at least one of the user profile and the environment scenario information to the server, and a data structure of the first information may adopt a preset data structure. For example, the preset data structure may include the following plurality of types of information: EnvIntents indicating a scenario intent; EnvParams indicating environment scenario information; and UserPortrait indicating user profile information (for example, a user tag included in a user profile).

Optionally, the preset data structure may further include CheckCode indicating a security check code. The security check code may be used by the server to check a message that is from the electronic device and that includes the scenario intent and at least one of the user profile and the environment scenario information. After the check succeeds, for example, when the security check code is correct, the server performs step S1504 and subsequent steps. In this way, the data structure includes the security check code, to ensure security of information sent by the electronic device to the server, and prevent the information from being tampered with.

Optionally, the data structure may further include DeviceType indicating a type of the electronic device. For example, the type of the electronic device may include but is not limited to various types such as a mobile phone, a tablet, and a watch. Optionally, the type of the electronic device may also be combined with the information described in embodiments of this application to determine response information, for example, including but not limited to an API included in the response information, and a multi-modal display manner of a result of calling the API. It may be understood that a plurality of different electronic devices may have a same account (for example, a Huawei account). For example, for a mobile phone, a tablet, a watch, and the like of a same user, corresponding user accounts may be the same. Therefore, some data of these different electronic devices may be shared. To prevent, from being completely the same, response information determined by the server for these different electronic devices, that is, to output different response information on different electronic devices under a same account, the electronic device may send the device type of the electronic device to the server, to further improve an output effect of the response information.

With reference to the foregoing data structure, for example, the user instruction is "I am going to travel to Beijing at 8:30 tomorrow morning. Please give me some travel suggestions". In this case, information sent by the intent framework system to the server may include the following content: CheckCode: 123321; EnvIntents: travel intent, and "I am going to travel to Beijing at 8:00 tomorrow morning. Please help me make the arrangements"; EnvParams: environment: quiet, network: Wi-Fi, and Bluetooth: enabled...; UserPortrait: "dislike waking up before 7:00", "prefer a comfortable seat", " prefer jade", " prefer a pet dog", ...; and DeviceType: mobile phone.

It may be understood that in step S1503, an example in which the electronic device sends the user profile and the environment scenario information to the server is used. In another embodiment, the server may alternatively obtain the user profile and the environment scenario information from a device other than the electronic device, or the server may determine the user profile, the environment scenario information, and the like. This is not limited in embodiments of this application.

For other descriptions of step S1503, refer to related descriptions of step S803 shown in FIG. 8.

S1504: The server generates the response information based on the scenario intent and at least one of the user profile and the environment scenario information.

In some embodiments, the server may generate the response information based on the scenario intent, an API corresponding to the scenario intent, and at least one of the user profile and the environment scenario information. For example, the server may generate the response information based on the scenario intent, the API corresponding to the scenario intent, and at least one of the user profile and the environment scenario information through the response information generation module 712 shown in FIG. 7. For descriptions of the API corresponding to the scenario intent, refer to related descriptions of step S804 shown in FIG. 8.

In a specific embodiment, the server may alternatively input the scenario intent, the API corresponding to the scenario intent, and at least one of the environment scenario information and the user profile into an AI model, and output the response information via the AI model. In this way, the response information is determined based on the scenario intent, the API corresponding to the scenario intent, and at least one of the user profile and the environment scenario information, so that richer and more comprehensive response information can be obtained, to meet a user requirement, and improve a human-machine dialog effect.

In some specific implementations, the server may input the received scenario intent, the API corresponding to the scenario intent, and at least one of the received user profile and environment scenario information into the AI model through the intent framework system 711 shown in FIG. 7. The server may further send, to the intent framework system 711 shown in FIG. 7, the response information output via the AI model.

Optionally, in this specific implementation, before the intent framework system inputs the user profile, the scenario intent, and the API corresponding to the scenario into the AI model, the intent framework system may match, with the API corresponding to the scenario intent, the user tag included in the user profile, that is, determine an association relationship between a user tag and an API. Certainly, the association operation may alternatively be performed by the AI model. This is not limited in embodiments of this application. In this way, when an API is displayed, a specific display effect of the API may be determined based on a user tag associated with the API, so that the response information matches the user profile, that is, corresponds to a preference of the user, and the response information can better meet a user requirement.

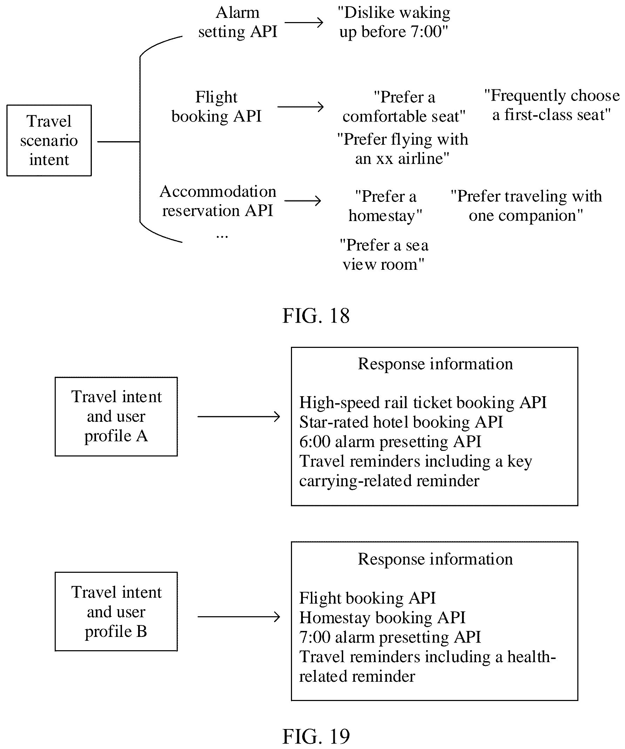

For example, as shown in FIG. 18, a travel scenario intent is used as an example. A user tag associated with an alarm setting API may include "dislike waking up before 7:00" and the like, a user tag associated with a flight booking API may include "prefer a comfortable seat", "frequently choose a first-class seat", "prefer flying with an xx airline", and the like, and a user tag associated with an accommodation reservation API may include "prefer a homestay", "prefer traveling with one companion", "prefer a sea view room", and the like.

In some embodiments, the response information corresponds to the user profile. For different user profiles, response information determined under a same scenario intent may be different, for example, including but not limited to that APIs included in the response information are different. For example, the scenario intent is a travel intent, and the travel intent is "I am going to travel to Beijing at 8:30 tomorrow morning. Please give me some travel suggestions". As shown in FIG. 19, for a user profile A, determined response information includes a high-speed rail ticket booking API, a star-rated hotel booking API, a 6:00 alarm presetting API, and travel reminders including a key carrying-related reminder. For a user profile B, determined response information includes a flight booking API, a homestay booking API, a 7:00 alarm presetting API, and travel reminders including a health-related reminder. In this way, under a same scenario intent, different users may correspond to different user profiles, and then corresponding response information is output based on different user profiles. In other words, different response information can be recommended for different users, so that requirements of various users can be flexibly met, and homogenization of generated response information can be avoided.

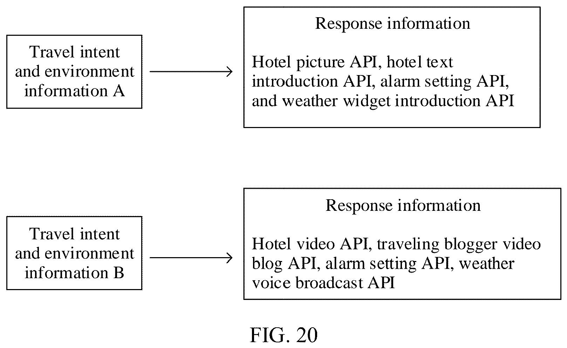

In some embodiments, the response information also corresponds to the environment scenario information. For different environment scenario information, response information determined under a same scenario intent may be different, for example, including but not limited to one or more of the following: APIs included in the response information are different, multi-modal display manners of the APIs included in the response information are different, and the like. For example, the scenario intent is still a travel intent, and the travel intent is "I am going to travel to Beijing at 8:30 tomorrow morning. Please give me some travel suggestions" and the like. As shown in FIG. 20, for environment scenario information A, for example, the environment scenario information A indicates that the electronic device is in a noisy environment, and determined response information includes a hotel picture API, a hotel text introduction API, an alarm setting API, a weather widget introduction API, and the like. For environment scenario information B, for example, the environment scenario information B indicates that the electronic device is in a quiet environment, and determined response information may include a hotel video API, a traveling blogger video blog API, an alarm setting API, a weather voice broadcast API, and the like.

In this way, preferences of the user may be different in different environment scenario information, for example, including but not limited to a volume and an interface parameter during API display. Further, appropriate response information and a display manner of the response information are recommended based on different environment scenario information, so that the output response information corresponds to the current environment scenario information, and preferences of the user in different environments under a same scenario intent can be met, to implement a personalized recommendation display effect.

For other descriptions of step S1504, refer to descriptions of step S804 shown in FIG. 8.

S1505: The server sends the response information to the electronic device. Correspondingly, the electronic device receives the response information from the server.

For example, the server may send the response information to the electronic device through the intent framework system 711 shown in FIG. 7. Correspondingly, the electronic device may receive the response information from the electronic device through the intent framework system 702 shown in FIG. 7.

In some embodiments, the intent framework system 711 may also send the response information to the electronic device through a preset data structure. For example, the preset data structure may include the following plurality of types of information: Answers indicating response information of a scenario intent; APIGroup indicating an API to be displayed; and PlayMethod indicating a multi-modal display manner.

Optionally, the preset data structure may further include CheckCode indicating a security check code. The security check code may be used by the electronic device to check the response information from the server. After the check succeeds, for example, when the security check code is correct, the electronic device performs step S1506. In this way, the data structure includes the security check code, to ensure security of information sent by the server to the electronic device, and prevent the information from being tampered with.

Optionally, to avoid that the server does not update content of an API interface on an electronic device side, after receiving the response information, the electronic device may further perform validity check on the API included in the response information. After determining that the API is valid, that is, the electronic device can successfully call the API, the electronic device outputs a result of calling the API, so that subsequently, the user may perform some operations on the result of calling the API, to ensure user experience.

S1506: The electronic device outputs the response information.

In some embodiments, the electronic device may output, in a multi-modal display manner included in the response information, a result of calling an API included in the response information.

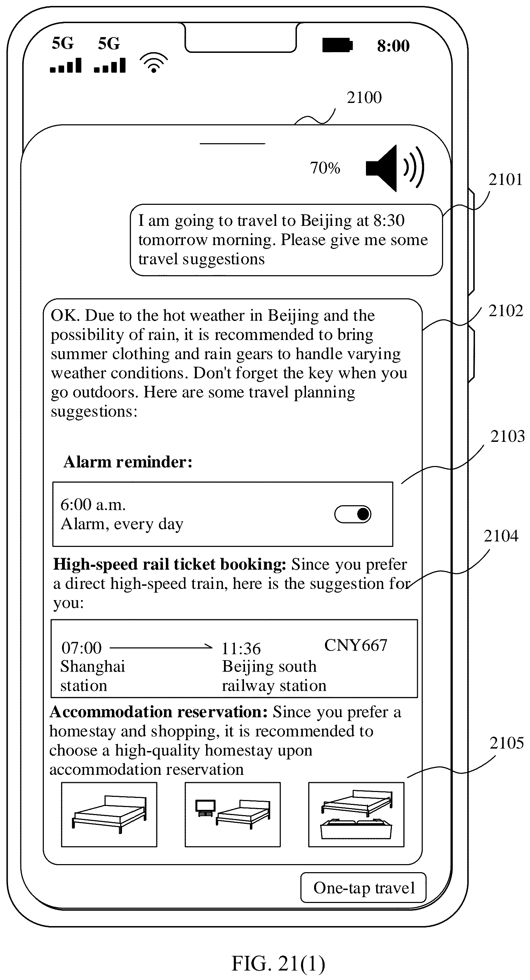

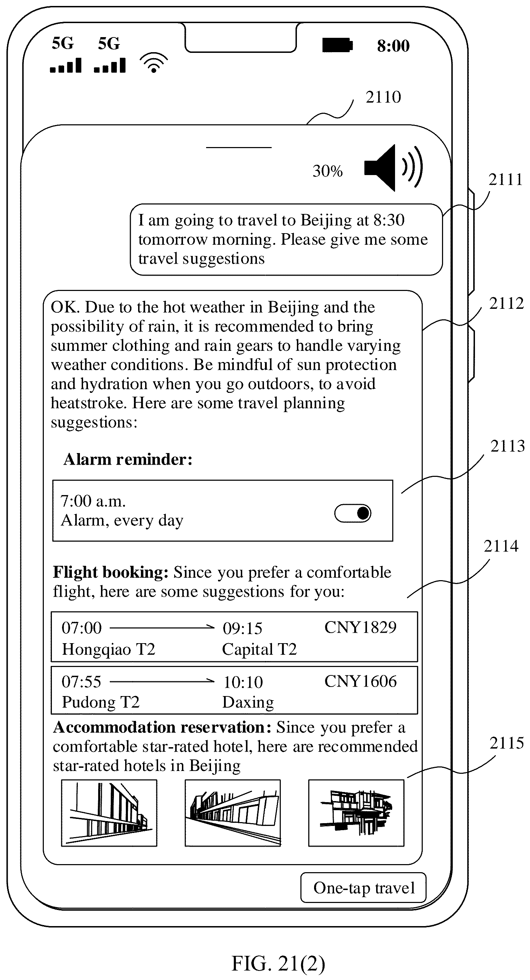

For example, with reference to the user profile shown in FIG. 19, FIG. 21(1) and FIG. 21(2) are a diagram of an interface of response information output by an electronic device according to an embodiment of this application. For example, FIG. 21(1) is a diagram of an interface for outputting response information generated based on the user profile A. As shown in FIG. 21(1), the electronic device may display a response interface 2100. The response interface 2100 includes a widget 2102, and the widget 2102 may be configured to display a result of calling an API included in the response information. Optionally, the response interface 2100 may further include a user instruction 2101.

The widget 2101 includes a result 2103 of calling the alarm setting API, a result 2104 of calling the high-speed rail ticket booking API, and a result 2105 of calling the accommodation reservation API. It may be understood that the alarm setting API may be an API that is of an application and that implements an alarm setting function, the high-speed rail ticket booking API may be an API that is of an application and that implements a high-speed rail ticket booking function, and the accommodation reservation API may be an API that is of an application and that implements an accommodation reservation function.

The alarm setting function may be implemented through the result 2103 of calling the alarm setting API. The high-speed rail ticket booking function may be implemented through the result 2104 of calling the high-speed rail ticket booking API. The accommodation reservation function may be implemented through the result 2105 of calling the accommodation reservation API.

Optionally, the widget 2102 may further include texts that remind the user of weather situations and texts of messages that remind the user of carrying such as "Due to the hot weather in Beijing and the possibility of rain, it is recommended to bring summer clothing and rain gears to handle varying weather conditions. Don't forget the key when you go outdoors"; and/or texts in a fixed format such as "OK" and "Here are some travel planning suggestions".

FIG. 21(2) is a diagram of an interface for outputting response information generated based on the user profile B. As shown in FIG. 21(2), the electronic device may display a response interface 2110. The response interface 2110 includes a widget 2112, and the widget 2112 may be configured to display a result of calling an API included in the response information. Optionally, the response interface 2110 may further include a user instruction 2111.

For example, the widget 2111 includes a result 2113 of calling the alarm setting API, a result 2114 of calling the flight booking API, and a result 2115 of calling the accommodation reservation API. For descriptions of the alarm setting API, the flight booking API, and the accommodation reservation API, refer to the foregoing descriptions.

The alarm setting function may be implemented through the result 2113 of calling the alarm setting API. The flight booking function may be implemented through the result 2114 of calling the flight booking API. The accommodation reservation function may be implemented through the result 2115 of calling the accommodation reservation API.

For example, if a user tag included in the user profile A reflects that the user dislikes waking up after 6:00, prefers traveling by high-speed rail, prefers staying in a homestay, and the like, as shown in FIG. 21(1), the result 2103 of calling the alarm setting API included in the response information is used to recommend a 6:00 alarm to the user, the result 2104 of calling the high-speed rail ticket API is recommended to the user, and a homestay is recommended to the user in the result 2105 of calling the accommodation reservation API.

If a user tag included in the user profile B reflects that the user dislikes waking up before 7:00, prefers traveling by air, prefers a comfortable hotel, and the like, as shown in FIG. 21(2), the result 2113 of calling the alarm setting API included in the response information is used to recommend a 7:00 alarm to the user, the result 2114 of calling the flight booking API is recommended to the user, and a star-rated hotel is recommended to the user in the result 2115 of calling the accommodation reservation API.

Optionally, under different user profiles, habits of the user in displaying results of calling APIs, for example, including but not limited to habits of volume adjustment, may be different. In this case, the response information may further include indication information, and the indication information may indicate a volume of the electronic device. Volumes of the electronic device included in the indication information may also be different. For example, when the electronic device displays the response interface shown in FIG. 21(1), the volume of the electronic device may be 70%. When the electronic device displays the response information shown in FIG. 21(2), the volume of the electronic device may be 30%. In this way, the electronic device adjusts, based on the user profile, the volume at which the electronic device outputs the response information, so that the volume of the electronic device can meet an actual habit of the user.

Certainly, under the same user profile, for different environment scenario information, habits of the user in displaying results of calling APIs, for example, including but not limited to habits of volume adjustment, may be different. In this case, in different environment scenario information, for a same user profile, the volumes of the electronic device included in the indication information in the response information may also be different.

In this way, the response information is generated based on the user profile, so that recommendation of the response information can better meet an actual requirement of the user, and pertinent recommendation of the response information can be implemented for different user profiles, so that the response information is richer.

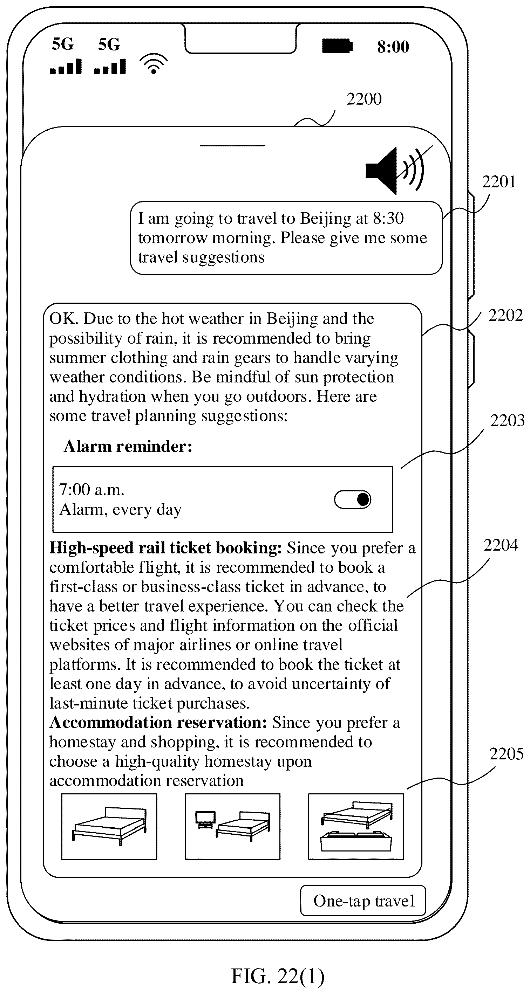

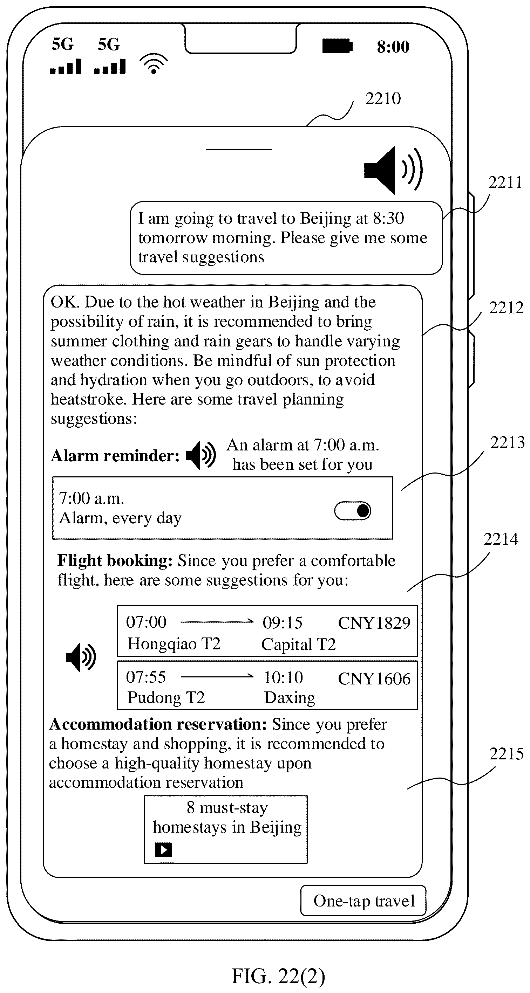

For example, FIG. 22(1) and FIG. 22(2) are a diagram of another interface of response information output by an electronic device according to an embodiment of this application. For example, when the environment scenario information of the electronic device indicates that the electronic device is in a noisy environment, the response information output by the electronic device may be shown in FIG. 22(1). The electronic device may display a response interface 2200. The response interface 2200 includes a widget 2202, and the widget 2202 may be configured to display a result of calling an API included in the response information. Optionally, the response interface 2200 may further include a user instruction 2201.

For example, the widget 2201 includes a result 2203 of calling the alarm setting API, a result 2204 of calling the flight booking API, and a result 2205 of calling the accommodation reservation API. In the noisy environment, because the user may not hear or focus on video or audio content, the user may be more inclined to read a text or view a picture. In this case, as shown in FIG. 22(1), the result 2203 of calling the alarm setting API, the result 2204 of calling the flight booking API, the result 2205 of calling the accommodation reservation API, and the like are displayed in text and picture.

For example, when the environment scenario information of the electronic device indicates that the electronic device is in a quiet environment, the response information output by the electronic device may be shown in FIG. 22(2). The electronic device may display a response interface 2210. The response interface 2210 includes a widget 2212, and the widget 2212 may be configured to display a result of calling an API included in the response information. Optionally, the response interface 2210 may further include a user instruction 2211.

For example, the widget 2212 includes a result 2203 of calling the alarm setting API, a result 2204 of calling the flight booking API, and a result 2205 of calling the accommodation reservation API. In the quiet environment, the user may be more inclined to watch a video or listen to an audio. In this case, as shown in FIG. 22(1), the result 2213 of calling the alarm setting API, the result 2214 of calling the flight booking API, the result 2215 of calling the accommodation reservation API, and the like are displayed in audio and video. For example, the electronic device may broadcast, in voice, content "An alarm at 7:00 a.m. has been set for you" of the result 2213 of calling the alarm setting API, and/or broadcast, in voice, flight information included in the result 2214 of calling the flight booking API, and/or display a homestay-related video in the result 2215 of calling the accommodation reservation API, for example, including but not limited to a homestay recommendation video and a homestay booking guide.

For descriptions of other content in FIG. 21(1), FIG. 21(2), FIG. 22(1), and FIG. 22(2), refer to descriptions of corresponding content in FIG. 13.

In this way, the response information is generated based on the environment scenario information, that is, the output response information may be adjusted based on the environment scenario information, so that recommendation that is of the response information and that is applicable to the current environment scenario information can be implemented, and the response information can meet a preference of the user in the current environment scenario information.

Based on the foregoing technical solution, recommendation of the response information is performed with reference to various information such as the scenario intent, the API corresponding to the scenario intent, the user profile, and the environment scenario information, so that the response information corresponds to the user profile and the environment scenario information. In this way, the response information can be more personalized and pertinent while a requirement of the user under the entered scenario intent is met, to meet an actual preference of the user.

In another embodiment, the server may further be assisted in determining the response information with reference to various notification messages, operation behaviors of the user on the response information, and the like. For example, the server may input, into the AI model, various notification messages, operation behavior data of the user for the response information, and information described in the foregoing embodiment, and output the response information via the AI model. In this way, the server further generates the response information with reference to various notification messages, operation behaviors of the user on the response information, and the like, so that the response information can be richer and more comprehensive, and a recommendation result of the response information can be further improved.

For example, the notification message may include but is not limited to various notification messages such as a weather notification, a flight delay notification, a train delay notification, a commodity discount notification, and a traffic congestion notification. The notification message may be reported by a third-party application or a system application to the intent framework system 702 and/or the intent framework system 711 shown in FIG. 7. Certainly, to ensure privacy security of the user, various notification messages, operation behaviors of the user on the response information, and the like that may be obtained by the server may be anonymized data.

It may be understood that various operations performed by the server in this embodiment of this application may alternatively be performed by the electronic device. This is not limited in embodiments of this application.

The foregoing mainly describes the solutions provided in embodiments of this application from the perspective of the methods. It may be understood that, to implement the foregoing functions, the device includes corresponding hardware structures and/or software modules for performing the functions. With reference to the units and algorithm steps described in embodiments disclosed in this application, embodiments of this application can be implemented in a form of hardware or hardware and computer software. Whether a function is performed by hardware or hardware driven by a computer depends on particular applications and design constraints of the technical solutions. A person skilled in the art may use different methods to implement the described functions for each particular application, but it should not be considered that the implementation goes beyond the scope of the technical solutions in embodiments of this application.

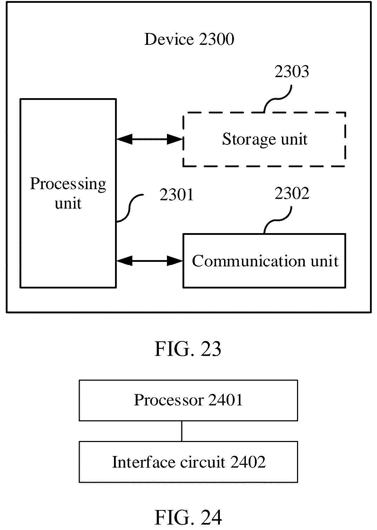

As another possible division manner, FIG. 23 is a diagram of a structure of a device 2300 according to an embodiment of this application. The device 2300 may be configured to implement the methods recorded in the foregoing method embodiments. For example, the device 2300 may specifically include a processing unit 2301 and a communication unit 2302.

In a possible example, the device 2300 is an electronic device. The processing unit 2301 is configured to support the device 2300 in performing step S801, step S802, and step S806 in FIG. 8; and/or the processing unit 2301 is configured to support the device 2300 in performing step S1501, step S1502, and step S1506 in FIG. 15; and/or the processing unit 2301 is further configured to support the device 2300 in performing other steps performed by the electronic device in embodiments of this application.

The communication unit 2302 is configured to support the device 2300 in performing step S803 and step S805 in FIG. 8; and/or the communication unit 2302 is configured to support the device 2300 in performing step S1503 and step S1505 in FIG. 15; and/or the communication unit 2302 is further configured to support the device 2300 in performing other steps performed by the electronic device in embodiments of this application.

In another possible example, the device 2300 is a server. The processing unit 2301 is configured to support the device 2300 in performing step S804 in FIG. 8; and/or the processing unit 2301 is configured to support the device 2300 in performing step S1504 in FIG. 15; and/or the processing unit 2301 is further configured to support the device 2300 in performing other steps performed by the server in embodiments of this application.

The communication unit 2302 is configured to support the device 2300 in performing step S803 and step S805 in FIG. 8; and/or the communication unit 2302 is configured to support the device 2300 in performing step S1503 and step S1505 in FIG. 15; and/or the communication unit 2302 is further configured to support the device 2300 in performing other steps performed by the server in embodiments of this application.

Optionally, the device 2300 shown in FIG. 23 may further include a storage unit 2303. The storage unit 2303 stores a program or instructions. When the processing unit 2301 executes the program or the instructions, the device 2300 shown in FIG. 23 is enabled to perform the method performed by the electronic device or the server in the foregoing embodiments.

Optionally, the device 2300 shown in FIG. 23 may further include an output unit (not shown in the figure). The output unit may be configured to support the device 2300 in outputting various information. Optionally, the output unit may be specifically implemented as a display unit, an audio output unit, or the like.

For technical effects of the device 2300 shown in FIG. 23, refer to technical effects of the method in the foregoing embodiments. Details are not described herein again. The processing unit 2301 in the device 2300 shown in FIG. 23 may be implemented by a processor or a processor-related circuit component, and may be a processor or a processing module. The communication unit 2302 may be implemented by a transceiver or a transceiver-related circuit component, and may be a transceiver or a transceiver module. The output unit may be implemented by a related component like a display or an audio module.

An embodiment of this application further provides a chip system. As shown in FIG. 24, the chip system includes at least one processor 2401 and at least one interface circuit 2402. The processor 2401 and the interface circuit 2402 may be connected to each other through a line. For example, the interface circuit 2402 may be configured to receive a signal from another apparatus. For another example, the interface circuit 2402 may be configured to send a signal to another apparatus (for example, the processor 2401). For example, the interface circuit 2402 may read instructions stored in the memory, and send the instructions to the processor 2401. When the instructions are executed by the processor 2401, the device is enabled to perform the steps performed by the electronic device or the server in the foregoing embodiments. Certainly, the chip system may further include another discrete device. This is not specifically limited in embodiments of this application.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed through a combination of hardware in the processor and a software module.

An embodiment of this application further provides a computer storage medium. The computer storage medium stores computer instructions, and when the computer instructions are run on a device, the device is enabled to perform the method in the foregoing method embodiments.

An embodiment of this application provides a computer program product. The computer program product includes a computer program or instructions. When the computer program or the instructions are run on a computer, the computer is enabled to perform the method in the foregoing method embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the apparatus to perform the method in the foregoing method embodiments.

An embodiment of this application further provides a communication system, including an electronic device and a server. The electronic device is configured to perform the method performed by the electronic device in the foregoing method embodiments, and the server is configured to perform the method performed by the server in the foregoing method embodiments.

The device, the computer storage medium, the communication system, the computer program product, or the chip provided in embodiments is configured to perform the corresponding method provided above. Therefore, for beneficial effects that can be achieved, refer to the beneficial effects of the corresponding method provided above. Details are not described herein again.

Based on the foregoing descriptions of the implementations, a person skilled in the art may understand that for the purpose of convenient and brief description, division into the foregoing functional modules is merely used as an example for illustration. In practice, the foregoing functions can be allocated to different functional modules for implementation as required, that is, an inner structure of an apparatus is divided into different functional modules to implement all or a part of the functions described above.

In the several embodiments provided in this application, it should be understood that the disclosed apparatus and method may be implemented in other manners. Embodiments may be combined or referenced with each other without conflict. The described apparatus embodiment is merely an example. For example, division into the modules or the units is merely logical function division and there may be other division in practice. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected as required to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A human-machine interaction method, applied to an electronic device, wherein the method comprises:
receiving a user instruction;
when the user instruction indicates a first scenario intent, obtaining a plurality of target application programming interfaces APIs based on the first scenario intent, wherein the plurality of target APIs correspond to the first scenario intent; and
outputting results of calling the plurality of target APIs, wherein the results of calling the plurality of target APIs are used to implement a user requirement corresponding to the first scenario intent.

2. The method according to claim 1, wherein obtaining the plurality of target APIs based on the first scenario intent comprises:
obtaining the plurality of target APIs based on the first scenario intent and a user profile and/or environment scenario information of the electronic device, wherein the environment scenario information of the electronic device indicates at least one of an ambient environment condition of the electronic device and a state of the electronic device.

3. The method according to claim 2, wherein obtaining the plurality of target APIs based on the first scenario intent and the user profile and/or the environment scenario information of the electronic device comprises:
sending the first scenario intent and the user profile and/or the environment scenario information of the electronic device to a server; and
receiving the plurality of target APIs from the server.

4. The method according to any one of claims 1 to 3, wherein outputting the results of calling the plurality of target APIs comprises:
outputting the results of calling the plurality of target APIs in a multi-modal display manner of the results of calling the plurality of target APIs, wherein the multi-modal display manner is a manner of displaying an API in a plurality of text, picture, audio, and video.

5. The method according to claim 4, wherein before outputting the results of calling the plurality of target APIs in the multi-modal display manner of the results of calling the plurality of target APIs, the method further comprises:
receiving, from the server, the multi-modal display manner of the results of calling the plurality of target APIs.

6. The method according to claim 4 or 5, wherein the multi-modal display manner corresponds to the environment scenario information of the electronic device.

7. The method according to claim 6, wherein
if the environment scenario information of the electronic device indicates that the electronic device is in a first environment condition, the multi-modal display manner is a first display manner; or
if the environment scenario information of the electronic device indicates that the electronic device is in a second environment condition, and the second environment condition is different from the first environment condition, the multi-modal display manner is a second display manner, and the second display manner is different from the first display manner.

8. The method according to claim 7, wherein the first environment condition is a quiet environment, the first display manner is displaying, in video and/or audio, the results of calling the plurality of target APIs; and the second environment condition is a noisy environment, and the second display manner is displaying, in text and/or picture, the results of calling the plurality of target APIs.

9. The method according to any one of claims 2 to 8, wherein the plurality of target APIs correspond to the user profile.

10. The method according to claim 9, wherein
if the user profile is a first user profile, the plurality of target APIs are a plurality of first APIs; or
if the user profile is a second user profile, and the second user profile is different from the first user profile, the plurality of target APIs are a plurality of second APIs, and the plurality of second APIs and the plurality of first APIs comprise different APIs.

11. The method according to any one of claims 2 to 10, wherein before receiving the user instruction, the method further comprises:
generating the user profile based on a plurality of a second scenario intent, an API corresponding to the second scenario intent, and an operation record of a user on a result of calling the API corresponding to the second scenario intent, wherein the second scenario intent is a scenario intent obtained before receiving the user instruction.

12. The method according to claim 1 to 11, wherein before obtaining the plurality of target APIs based on the first scenario intent, the method further comprises:
determining the first scenario intent based on a preset scenario intent set and the user instruction, wherein the preset scenario intent set comprises a plurality of scenario intents.

13. The method according to claim 3, wherein the first scenario intent and the user profile and/or the environment scenario information of the electronic device are comprised in first information, the first information further comprises at least one of a security check code and a type of the electronic device, the security check code is used to check the first information, and the type of the electronic device is used to determine the plurality of target APIs.

14. A human-machine interaction method, applied to a server, wherein the method comprises:
receiving first information from an electronic device, wherein the first information comprises a first scenario intent;
generating second information based on the first information and an API corresponding to the first scenario intent, wherein the second information comprises a plurality of target APIs, the plurality of target APIs correspond to the first scenario intent, and the plurality of target APIs are used to implement a user requirement corresponding to the first scenario intent; and
sending the second information to the electronic device.

15. The method according to claim 14, wherein the first information further comprises a user profile and/or environment scenario information of the electronic device, wherein the environment scenario information of the electronic device indicates at least one of an ambient environment condition of the electronic device and a state of the electronic device.

16. The method according to claim 15, wherein the second information further comprises a multi-modal display manner of results of calling the plurality of target APIs, and the multi-modal display manner is a manner of displaying an API in a plurality of text, picture, audio, and video.

17. The method according to claim 16, wherein the multi-modal display manner corresponds to the environment scenario information of the electronic device.

18. The method according to claim 17, wherein
if the environment scenario information of the electronic device indicates that the electronic device is in a first environment condition, the multi-modal display manner is a first display manner; or
if the environment scenario information of the electronic device indicates that the electronic device is in a second environment condition, and the second environment condition is different from the first environment condition, the multi-modal display manner is a second display manner, and the second display manner is different from the first display manner.

19. The method according to claim 18, wherein the first environment condition is a quiet environment, the first display manner is displaying, in video and/or audio, the results of calling the plurality of target APIs; and the second environment condition is a noisy environment, and the second display manner is displaying, in text and/or picture, the results of calling the plurality of target APIs.

20. The method according to any one of claims 15 to 19, wherein the plurality of target APIs correspond to the user profile.

21. The method according to claim 20, wherein
if the user profile is a first user profile, the plurality of target APIs are a plurality of first APIs; or
if the user profile is a second user profile, and the second user profile is different from the first user profile, the plurality of target APIs are a plurality of second APIs, and the plurality of second APIs and the plurality of first APIs comprise different APIs.

22. The method according to any one of claims 14 to 21, wherein before generating the second information based on the first information and the API corresponding to the first scenario intent, the method further comprises:
determining, based on a preset scenario intent set, an API corresponding to the preset scenario intent set, and the first scenario intent, the API corresponding to the first scenario intent, wherein the preset scenario intent set comprises a plurality of scenario intents, and the API corresponding to the preset scenario intent set is an API corresponding to each of the plurality of scenario intents.

23. The method according to any one of claims 14 to 22, wherein generating the second information based on the first information and the API corresponding to the first scenario intent comprises:
inputting the first information and the API corresponding to the first scenario intent into a preset model, and outputting the second information via the preset model.

24. The method according to any one of claims 14 to 23, wherein the first information further comprises at least one of a security check code and a type of the electronic device, the security check code is used to check the first information, and the type of the electronic device is used to determine the plurality of target APIs.

25. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the method according to any one of claims 1 to 13.

26. A server, comprising a processor, a memory, and a communication interface, wherein the memory and the communication interface are coupled to the processor, the communication interface is configured to communicate with another device, the memory is configured to store computer program code, the computer program code comprises computer instructions, and when the processor reads the computer instructions from the memory, the server is enabled to perform the method according to any one of claims 14 to 24.

27. A computer-readable storage medium, wherein the computer-readable storage medium comprises a computer program, and when the computer program is run on an electronic device, the electronic device is enabled to perform the method according to any one of claims 1 to 13; or when the computer program is run on a server, the server is enabled to perform the method according to any one of claims 14 to 24.

28. A computer program product, wherein the computer program product comprises a computer program or instructions, and when the computer program or instructions are run on a computer, the computer is enabled to perform the method according to any one of claims 1 to 13, or the computer is enabled to perform the method according to any one of claims 14 to 24.

29. A communication system, comprising an electronic device and a server, wherein the electronic device is configured to perform the method according to any one of claims 1 to 13, and the server is configured to perform the method according to any one of claims 14 to 24.
